(19) **Europäisches Patentamt European Patent Office Office européen des brevets**

(11) **EP 3 123 684 B1**

(12) **EUROPEAN PATENT SPECIFICATION**

(45) Date of publication and mention
of the grant of the patent:
**12.02.2020 Bulletin 2020/07**

(51) Int Cl.:
*H04L 27/34* (2006.01)     *H04L 1/00* (2006.01)
*H04L 5/00* (2006.01)      *H04W 28/06* (2009.01)
*H04W 72/02* (2009.01)     *H04B 17/336* (2015.01)
*H04W 28/18* (2009.01)

(21) Application number: **14714680.7**

(22) Date of filing: **28.03.2014**

(86) International application number:
**PCT/EP2014/056365**

(87) International publication number:
**WO 2015/144250 (01.10.2015 Gazette 2015/39)**

(54) **TRANSMITTER DEVICES AND METHOD THEREOF**

SENDERVORRICHTUNG UND VERFAHREN DAFÜR

DISPOSITIF ÉMETTEUR ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.02.2017 Bulletin 2017/05**

(73) Proprietor: **Huawei Technologies Co. Ltd. Shenzhen, Guangdong 518129 (CN)**

(72) Inventors:
  • **PEROTTI, Alberto**
    **S-16440 Kista (SE)**
  • **POPOVIC, Branislav**
    **S-16440 Kista (SE)**

(74) Representative: **Kreuz, Georg Maria et al Huawei Technologies Duesseldorf GmbH Riesstraße 25 80992 München (DE)**

(56) References cited:
**EP-A1- 2 299 737     EP-A1- 2 326 053**

## Description

## Technical Field

The present invention relates to a transmitter device arranged for concurrent transmission of downlink data streams. Furthermore, the present invention also relates to a corresponding system, a corresponding method and a computer program product.

## Background

On the Downlink (DL) of a cellular network, such as for example a Long Term Evolution (LTE) network, a single transmitter sends several encoded and modulated data streams to multiple User Equipment (UE) receivers over a shared physical channel. The physical channel is typically shared under control of a dedicated controller, a so-called scheduler, which determines how the total available time-frequency-space resources at the transmitter are allocated to different UEs at each transmission time interval. The scheduler must take into account a number of parameters and criteria in each transmission interval.

The basic scheduling principle is that certain time-frequency-space resources are allocated to the UE which can draw the largest benefit of these resources. Such benefit is typically measured by the Spectral Efficiency (SE) that can be achieved at UE's receiver. However, the scheduler also has to take care that all the users that expect reception from the transmitter are served with a delay that does not exceed certain prescribed limit. In other words, the scheduler has to ensure a fair sharing of DL resources between all the active UEs. Good spectral efficiency and service fairness are often contradicting requirements.

A widely spread method to achieve both is to use orthogonal multiple access transmissions, such that disjoint (i.e. orthogonal) time-frequency-space resources are allocated to different UEs. It means that a Resource Element (RE) is allocated only to one UE.

Future wireless networks are expected to have significantly increased DL data traffic, either in the form of increased number of UEs connected to a single DL transmitter (for example, the UEs might be sensors), or in the form of multiple, virtually concurrent data streams transmitted to the same UE from a single transmitter (for example, where each stream corresponds to a different application running on the same UE). Both cases can be modelled as an increased number of high-rate DL data streams, which might be difficult or impossible to achieve through an orthogonal multiple access method, i.e. without using REs for simultaneous transmissions to multiple UEs.

The simultaneous transmission of multiple signals using common REs is the basic feature of Non-Orthogonal Multiple Access (NOMA) methods. The practical NOMA methods can be designed starting from different scenarios, where each scenario is characterized by a specific optimization criterion or target for selection of transmission parameters, leading to quite different solutions. However, all NOMA transmission methods have to ensure reliable separation/detection, demodulation and decoding of each individual multiplexed stream at the intended UEs.

In one scenario, the optimization target is the maximization of the aggregate DL spectral efficiency (of one transmitter) by simultaneous transmission to the UEs experiencing similar physical communication channel qualities. The UEs that report to the transmitter similar Channel Quality Indicators (CQI) are grouped by the scheduler into the same category, and then served by the same transmission resources when the instantaneous channel conditions are the best for the given resources. The corresponding NOMA methods thus preserve the same data rate, the same transmitted energy per bit of each multiplexed stream, and the same scheduler design as if each of the multiplexed streams would have been transmitted alone on observed time-frequency-space resources. It further means that the transmitted power per RE is increased proportionally to the overloading factor, i.e. the number of multiplexed streams. The NOMA schemes designed using this principle include, for example, Low-Density Spread (LDS) Multiple Access (LDSMA), Trellis-Coded Multiple Access (TCMA) and its enhanced version (ETCMA), Constellation-Expansion Multiple Access (CEMA), etc.

In another overloading scenario, the target is to increase the number of UEs served per RE, but without increasing transmit power per RE. The direct consequence of conserving the transmit power per RE is that the achievable data rates of each of multiplexed UE signals are lower than if each of them would have been transmitted separately. An additional target is to do multiplexing in such a way that the aggregate rate of concurrently served UEs is larger than the aggregate rate that can be obtained by time division multiplexing of these UEs (where each transmission interval is split into subintervals corresponding to different UEs). It can be shown that this target can be achieved only if the received Signal-to-Noise Ratios (SNRs) of multiplexed UEs are not equal. Indeed, the higher the SNR difference, the higher the gain one can expect from concurrent transmission. It should be noted that this target is not equivalent to maximizing the aggregate data rate per RE, as it can be shown that the aggregate data rate cannot be larger than the maximum single UE data rate that can be obtained for the UE with the highest received SNR. The practical implementation of such NOMA scheme is based on the weighted amplitude superposition of error-correction code words for (typically two) different UEs, where UE-specific amplitude scaling keeps the total power per RE equal to the RE power for single UE transmission. We shall refer to such scheme as amplitude-weighted NOMA (AW-NOMA). Each amplitude scaling coefficient uniquely determines the maximum code rate for the corresponding UE.

The weighted amplitude superposition of error-correction code words results in the transmitted signal whose constellation points depend of the chosen UE-specific weights and modulation constellations. Therefore the constellation symbols of the AW-NOMA signal typically belong to a constellation that is different from the conventional, well-studied and practically used modulation constellations, such as QPSK, 16QAM, 64QAM, etc. Such unconventional constellations, heavily dependent on the instantaneous code rates of multiplexed UEs, may cause difficulties in the design of Radio Frequency (RF) chains in both transmitter and corresponding receivers.

For example, some constellation points might be so close that any deviation from their ideal positions due to hardware imperfections (such as carrier leakage, low image rejection ratio, phase noise, etc.) can make correct reception not feasible if these hardware imperfections are not tightly controlled, which in turn makes the design and implementation more expensive.

Additionally, the standardization of AW-NOMA might require additional, possibly significant effort in order to specify the minimum requirements for these hardware imperfections, which are typically measured by the Error Vector Magnitude (EVM), sometimes also called Receive Constellation Error (RCE) or by the Modulation Error Ratio (MER). Roughly described, the EVM is a measure of how far the transmitted/received constellation points are from the ideal locations. Thus it might happen that AW-NOMA signals require new, tighter EVM requirements than those specified in the current cellular standards.

Besides, it is hard to predict and evaluate performances of AW-NOMA constellations on fading channels, as they depend on the ratio of weighting coefficients, which can be practically arbitrary, as opposed to conventional modulation constellations points whose positions are independent of the code rate, and whose performances are well-known.

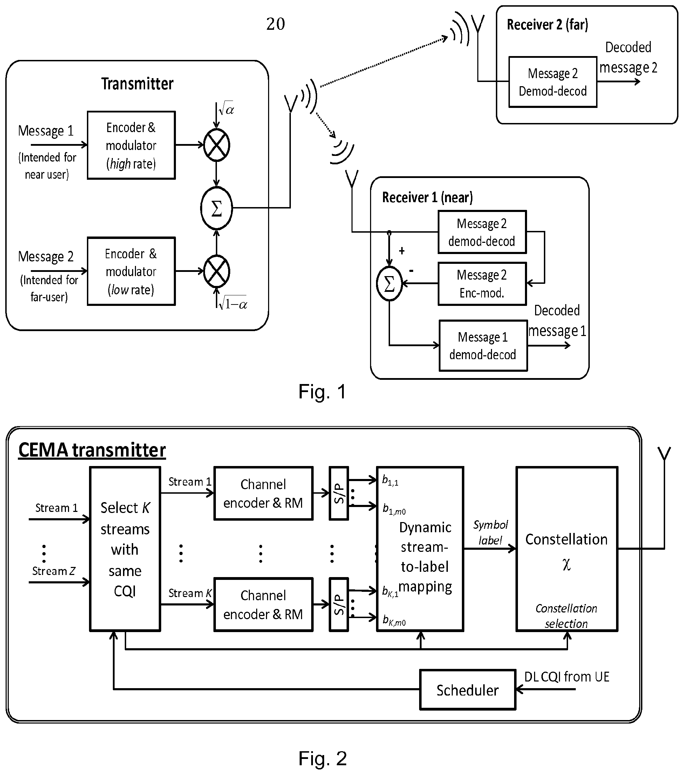

The AW-NOMA scheme performs simple superposition of coded and modulated signals: each message is encoded with a different rate than modulated. After modulation, signals are amplitude-weighted, then superposed and transmitted (see Fig. 1). Two active users are operating in the system: a near user which, due to the lower path loss, experiences a high SNR, and a far user which experiences a lower SNR. Different amplitude weights are applied to the near and far user signals: the signal intended for the near (resp. far) user is weighted by coefficient $\sqrt{\alpha}$ (resp. $\sqrt{1-\alpha}$). The total transmitted power per RE remains the same for all values of $\alpha \in [0,1]$.

The ability of each receiver to correctly decode a message depends on the chosen values of $\alpha$ and on the coding rates. Given $\alpha$, if the receiver is capable of decoding messages encoded with a certain coding rate, then it will correctly decode all messages encoded with lower coding rates.

Each receiver reports to the transmitter its SNR level or CQI. Based on this information, the AW-NOMA transmitter will choose coding rates, modulation schemes and $\alpha$ that make possible for the near user to decode the high-rate message and for the far user to decode the low-rate message.

Nevertheless, the near receiver is able to decode both the high-rate and low-rate messages. By correctly decoding the low-rate message, the near receiver has the opportunity of completely eliminating the interference caused by the presence of the far user signal in the received signal. The signal obtained after far-user interference cancellation contains the high-rate encoded message plus noise, hence it can be decoded with improved reliability. This process is known as Successive Interference Cancellation (SIC).

The far user, which experiences a lower SNR, is unable to decode the high-rate message, therefore it cannot cancel the interference caused by the near user in the received signal. Therefore, the rate used to encode the far user message must be low enough to make decoding possible even in presence of interference.

The CEMA schemes perform concurrent transmission of multiplexed streams using the modulation constellations already available in any transmission scheme. As a result, the adoption of CEMA has a very limited impact on the transmission scheme, since existing signal detection, synchronization and channel estimation algorithms do not need to be modified. Fig. 2 shows a scheme of the CEMA transmitter.

CEMA targets the maximization of the aggregate DL spectral efficiency by simultaneous transmission to UEs experiencing similar channel qualities. The UEs that report to the transmitter similar CQI are grouped by the scheduler into the same category, and then served using the same transmission resources, e.g. REs.

Each user's information stream is independently encoded and rate-matched with the same coding rate for all users. The modulation constellation that would have been used if users were served independently (a.k.a. base constellation) is expanded into a higher order constellation - the expanded constellation - common to all users. The order of such larger constellation is chosen so as to accommodate all of the coded bits of the concurrently transmitted rate-matched code words.

The operation of multiplexing the multiple data streams of coded bits into one stream of binary symbol labels is performed by a dynamic stream-to-label mapper. This block dynamically changes the applied mapping rule from symbol to symbol in order to satisfy the data rate and error protection requirements of each multiplexed stream. Labels generated by the dynamic stream-to-label mapper are used to select from the expanded constellation the symbols to be transmitted.

CEMA provides increased aggregate SE for users experiencing similar channel quality. However, when the multiplexed users feature different channel qualities, CEMA becomes spectrally inefficient. In fact, in order to provide reliable communication for the users with lower SNR, low coding rates must be chosen. This way, the effective SE of the high-SNR users is well below the value that would have been attained if they had been multiplexed with users experiencing similar channel quality.

Another example is the hierarchical modulation allocation shown in EP2299737A1 ('Base Station Apparatus and Data Mapping Method') where good UE and band UE are paired to have a hierarchical modulation to improve the efficiency. This idea is further elaborated in EP2326053A1 (Transmission Device, Reception Device, Transmission Method, and Reception Method).

**Summary**

An objective of the present invention is to provide a solution which mitigates or solves the drawbacks and problems of conventional solutions for concurrent transmission of non-orthogonal independent downlink data streams.

Another objective of the present invention is to provide an alternative NOMA scheme (e.g. with a fixed transmit power per RE), which can use conventional modulation constellations while having at least the same spectral efficiencies and data rates as AW-NOMA.

According to a first aspect of the invention, the above mentioned and other objectives are achieved with a transmitter device as defined in claim 1.

According to a third aspect of the invention, the above mentioned and other objectives are achieved by a transmission method comprising the steps specified in claim 9.

The present invention also relates to a computer program, characterized in code means, which when run by processing means causes said processing means to execute any method according to the present invention. Further, the invention also relates to a computer program product comprising a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

A multiplexing matrix $\mathbf{M}$ typically indicates to which modulation symbol and to which bit in the label of that symbol each coded bit has to be mapped.

The channel quality is a representation of the propagation conditions experienced by radio signals and is typically a function of SNR, SINR and Signal to Noise and Distortion ratio (SINAD).

The transmission is typically performed as concurrent DL transmission of non-orthogonal independent downlink data streams to receiver devices in a wireless communication system.

Embodiments of the present invention disclose a non-orthogonal multiple access scheme, which may be denoted Rate Adaptive-CEMA (RA-CEMA), in which multiple (non-orthogonal) data streams are independently encoded and rate-matched, and thereafter multiplexed and concurrently transmitted using a set of time-frequency-space Resource Elements (REs) in the DL. Embodiments of the invention are capable of providing increased spectral efficiencies by performing concurrent transmission to receiver devices having different channel qualities. The RA-CEMA can use the same modulation schemes already available in any transmission scheme, thus minimizing the impact on hardware requirements and on the modulation, synchronization and detection algorithms of existing wireless communication standards. Hence, the use of conventional modulations together with the capability of attaining the performance of AW-NOMA makes the present solution easily incorporated in any current wireless communication standard. Therefore, the proposed scheme features among others the following advantages with respect to conventional solutions: the capability of achieving increased spectral efficiency (SE) by multiplexing users with different channel qualities; fixed transmit power per RE; use of conventional modulation constellations, like QPSK, QAM, M-PSK, etc.

The transmitter device is according to an embodiment of the present invention further adapted to: receive the downlink channel qualities from said plurality of receiver devices; and/or estimate the downlink channel qualities by measuring corresponding uplink channels for said plurality of receiver devices.

According to this embodiment the downlink channel qualities can be based on Signal-to-Noise Ratio, SNR, or Signal-to-Interference and Noise Ratio, SINR. This is a very handy way of estimating the channel quality and well known conventional methods can be used.

The transmitter device is according to yet another embodiment of the present invention further adapted to obtain said multiplexing matrix $\mathbf{M}$ from a pre-computed library comprising a plurality of multiplexing matrices $\mathbf{M}_h$ or representations thereof. Having a library of pre-designed matrices or representations thereof is a very feasible design solution easy to implement.

According to this embodiment the transmitter device can be further adapted to signal an indication of said selected multiplexing matrix **M** to said plurality of receiver devices. Thereby, the receiver devices can easily de-multiplex the received signal since it knows the selected multiplexing matrix.

Further, according to this embodiment said indication can be an index in said pre-computed library for said selected multiplexing matrix **M.** This embodiment reduces overhead since signalling an index instead of full matrices requires much fewer bits.

Yet further, according to this embodiment said pre-computed library can comprise a plurality of template matrices $\mathbf{T}_q$ having size $m \times G$, where $m = m_1 + m_2... + m_U$ and $G = \max(G_1,..., G_U)$, and said transmitter device can further be adapted to obtain said multiplexing matrix **M** by using said plurality of template matrices $\mathbf{T}_q$ and a design parameter $G'$ having a value in the range from 1 to $G$. The value for $G'$ can preferably be obtained through a simulation based optimization procedure. By using template matrices $\mathbf{T}_q$ to generate multiplexing matrices less memory is needed, when compared to pre-stored matrices.

Yet further, according to these embodiments the transmitter device can be further adapted to signal to each of said plurality of receiver devices their respective associated receiver device index $u = 1, 2,..., U$. Thus the receiver device knows its corresponding index in the selected multiplexing matrix **M.**

According to yet another embodiment of the transmitter device at least two column elements of at least one column of said multiplexing matrix **M** are associated with different receiver devices $u = 1,2,..., U$. This means that the multiplexing matrix **M** is non-orthogonal so as to take advantage of different experienced channel qualities in DL transmissions.

According to yet another embodiment of the transmitter device said multiplexing matrix **M** has size $m \times G$, where $m = m_1 ... + m_U$ and $G = \max(G_1,..., G_U)$. This is a very simple and convenient way of defining the multiplexing matrix **M.**

According to this embodiment the transmitter device can be further adapted to transmit said downlink signal *S* with *G* number of time-frequency REs. As no more than G number of time-frequency REs have been assigned to each receiver device it is easy to extend and modify conventional scheduling algorithms to the present solution.

The receiver device is according to an embodiment further adapted to obtain said multiplexing matrix **M** by selecting a multiplexing matrix **M** from a pre-computed library comprising a plurality of multiplexing matrices $\mathbf{M}_h$ or representations thereof. Having a library of pre-designed matrices or representations thereof is a very feasible design solution easy to implement.

According to this embodiment the receiver device can be further adapted to receive a signal comprising an indication of said multiplexing matrix **M.** Thereby, the receiver devices can easily de-multiplex the received signal since it knows the selected multiplexing matrix.

Further according to this embodiment said indication can be an index in said pre-computed library for said selected multiplexing matrix **M.** This embodiment reduces overhead since signalling an index instead of full matrices requires much fewer bits.

Yet further according to this embodiment said pre-computed library can comprise a plurality of template matrices $\mathbf{T}_q$ having size $m \times G$, where $m = m_1 ... + m_U$ and $G = max(G_1, ..., G_U)$, and said receiver device (50) can further be adapted to obtain said multiplexing matrix **M** by using said plurality of template matrices $\mathbf{T}_q$ and a design parameter $G'$ having a value in the range from 1 to $G$. The value for $G'$ can preferably be obtained through a simulation based optimization procedure. By using template matrices $\mathbf{T}_q$ to generate multiplexing matrices less memory is needed.

Further according to these embodiments the receiver device can be further adapted to receive a signal indicating a receiver device index $u = 1, 2,..., U$ for said receiver device. Thus the receiver device knows its corresponding index in the multiplexing matrix **M.**

Further applications and advantages of the invention will be apparent from the following detailed description. The scope of the invention is defined in the appended claims. Any reference to "embodiment(s)" or "aspect(s) of the invention" in this description not falling under the scope of the claims should be interpreted as illustrative example(s) for understanding the invention.

**Brief Description of the Drawings**

The appended drawings are intended to clarify and explain different embodiments of the present invention, in which:

- Fig. 1 illustrates AW-NOMA;
- Fig. 2 illustrates a CEMA transmitter;
- Fig. 3 illustrates a RA-CEMA system according to an embodiment of the present invention;
- Fig. 4 illustrates a RA-CEMA scheduler according to an embodiment of the present invention;
- Fig. 5 illustrates rate adaptive code word multiplexer operation;
- Fig. 6 illustrates transmission procedure of RA-CEMA with two receiver devices according to an embodiment of the present invention;

- Fig. 7 is a flow chart illustrating an embodiment of the present invention;
- Fig. 8 shows an example of an multiplexing matrix with non-interfering mapping;
- Fig. 9 shows an example of an multiplexing matrix with interfering mapping;
- Fig. 10 shows label of 64-QAM;
- Fig. 11 illustrates information of the binary-input channels resulting from 64-QAM with Gray labelling;
- Fig. 12 illustrates RA-CEMA receiver for a near receiver device;
- Fig. 13 illustrates a multiplexing matrix library;
- Fig. 14 illustrate template matrices;
- Fig. 15 shows performance results for embodiments of the present invention;
- Fig. 16 shows further performance results for embodiments of the present invention;
- Fig. 17 illustrates a transmitter device according to an embodiment of the present invention;
- Fig. 18 illustrates a transmission method according to an embodiment of the present invention;
- Fig. 19 illustrates a receiver device according to an embodiment of the present invention; and
- Fig. 20 illustrates a receiving method according to an embodiment of the present invention.

## Detailed Description

Embodiments of the invention herein disclosed relates to a transmit device for concurrent transmission of multiple independent data streams, intended for receiver devices with different experienced channel qualities. Embodiments of the present invention applies to the downlink of wireless communication systems, operating e.g. in the Frequency Division Duplex (FDD) mode or in the Time Division Duplex (TDD) mode.

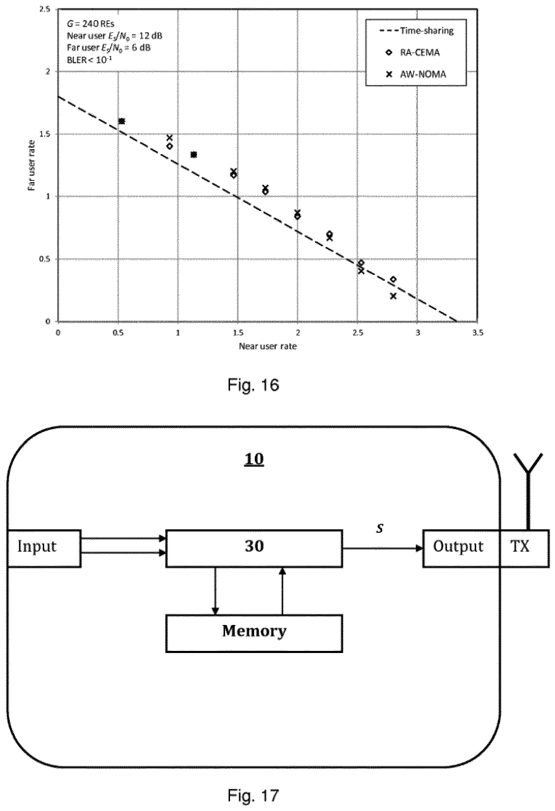

Fig. 17 illustrates a transmitter device 10 according to an embodiment of the present invention. The transmitter device 10 comprises at least one processor 30 adapted to: select a plurality of receiver devices 50 $u = 1, 2,..., U$ having different downlink channel qualities; determine for each user a code rate $R_u$, a modulation order $m_u$, and number of Resource Elements, REs, $G_u$; obtain a multiplexing matrix $\mathbf{M}$ based on the determined code rates $R_{u=1,2,...,U}$, modulation orders $m_{u=1,2,...,U}$ and number of REs $G_{u=1,2,...,U}$ for said plurality of receiver devices 50; independently encode for each receiver device 50 an information message $\mathbf{b}_u = (b_u(0),..., b_u(K_u - 1))$ so as to obtain an encoded information message $\mathbf{e}_u = (e_u(0),..., e_u(E_u - 1))$; multiplex the encoded information messages $\mathbf{e}_0,...,\mathbf{e}_{U-1}$ into a label vector $\mathbf{l} = (l(0),...,l(G - 1))$ having m-bit labels based on said multiplexing matrix $\mathbf{M}$; using each label of said label vector $\mathbf{l} = (l(0),...,l(G - 1))$ to select a modulation symbol from a modulation constellation of order m so as to obtain a symbol vector $\mathbf{x} = (x(0),...,x(G - 1))$ for said multiplexed encoded information messages $\mathbf{e}_0, ...,\mathbf{e}_{U-1}$; and transmit a downlink signal $\mathbf{S}$ comprising said symbol vector $\mathbf{x} = (x(0),...,x(G - 1))$. The transmitter device 10 may according to an embodiment further be adapted for concurrent transmission of non-orthogonal independent downlink data streams to the receiver devices 50 in a wireless communication system.

The device 10 in the example shown in Fig. 17 also comprises an input unit for receiving channel quality values for different receive devices/users. A memory is further comprised in the transmitter device 10, which may adapted to store general information, a multiplexing matrix library, program instructions, etc. Further, the transmitter device 10 comprises an output unit coupled to a transmit unit, TX, for transmission of said downlink signal $\mathbf{S}$ in the wireless communication system.

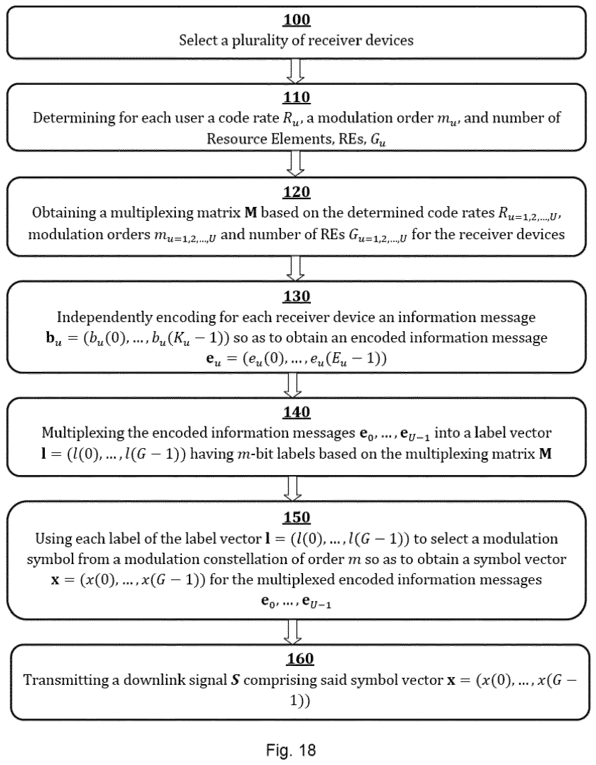

Fig. 18 illustrates a corresponding transmission method of the above transmit device 10. The method comprises the steps of:

100) selecting a plurality of receiver devices 50 $u = 1,2,..., U$ having different downlink channel qualities;
110) determining for each user a code rate $R_u$, a modulation order $m_u$, and number of Resource Elements, REs, $G_u$;
120) obtaining a multiplexing matrix $\mathbf{M}$ based on the determined code rates $R_{u=1,2,...,U}$, modulation orders $m_{u=1,2,...,U}$ and number of REs $G_{u=1,2,...,U}$ for said plurality of receiver devices 50;
130) independently encoding for each receiver device 50 an information message $\mathbf{b}_u = (b_u(0),..., b_u(K_u - 1))$ so as to obtain an encoded information message $\mathbf{e}_u = (e_u(0),...,e_u(E_u - 1))$;
140) multiplexing the encoded information messages $\mathbf{e}_0,...,\mathbf{e}_{U-1}$ into a label vector $\mathbf{l} = (l(0),...,l(G - 1))$ having m-bit labels based on said multiplexing matrix $\mathbf{M}$;
150) using each label of said label vector $\mathbf{l} = (l(0),...,l(G - 1))$ to select a modulation symbol from a modulation constellation of order m so as to obtain a symbol vector $\mathbf{x} = (x(0),..., x(G - 1))$ for said multiplexed encoded information messages $\mathbf{e}_0,...,\mathbf{e}_{U-1}$; and
160) transmitting a downlink signal $\mathbf{S}$ comprising said symbol vector $\mathbf{x} = (x(0),...,x(G - 1))$.

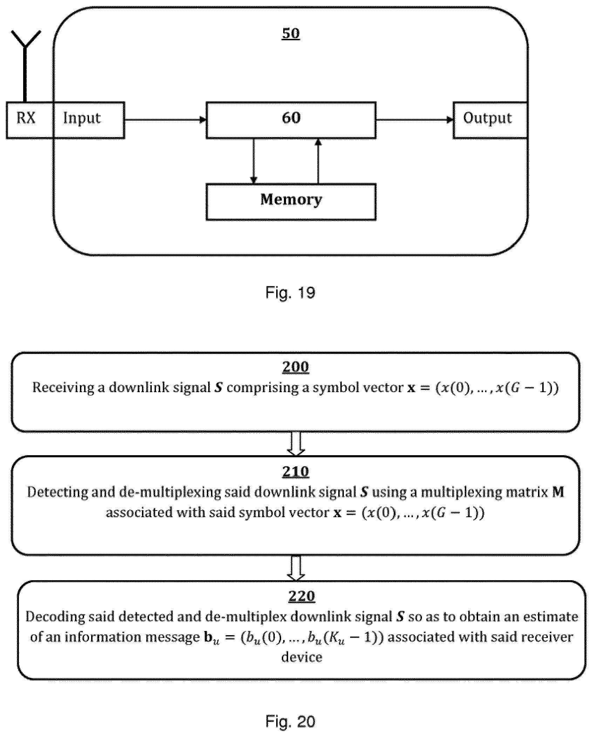

Furthermore, Fig. 19 illustrates a receiver device 50 according to an embodiment of the present invention. The receiver device 50 comprises at least one processor 60 adapted to receive a downlink signal $\mathbf{S}$ comprising a symbol vector $\mathbf{x} = (x(0),...,x(G - 1))$ according to the present transmitter device 10 by means of a receiver, RX, unit and an input unit which is coupled to the processor 60. The processor 60 is further adapted to detect and de-multiplex the downlink signal $S$ using a multiplexing matrix $\mathbf{M}$ associated with the symbol vector $\mathbf{x} = (x(0),...,x(G - 1))$. Finally, the processor 60 decodes the detected and de-multiplexed downlink signal $S$ to obtain an estimate of an information message $\mathbf{b}_u = (b_u(0),...,b_u(K_u-1))$ associated with the receiver device 50. The receiver device 50 may further be adapted to receive an indication or an index of the used multiplexing matrix $\mathbf{M}$ and the user index so as to easily derive the multiplexing matrix $\mathbf{M}$ from the memory unit and to use it. The indication, index, and user index may be received in a DL control signal via a common input unit or via a dedicated input unit of the receiver device 50. The receiver device 50 may further according to an embodiment be adapted for receiving downlink signals in a wireless communication system.

Fig. 20 illustrates a corresponding receiving method to the above receiver device 50. The method comprises the steps of:

200) receiving a downlink signal $S$ comprising a symbol vector $\mathbf{x} = (x(0),...,x(G - 1))$ according to the above described transmitting method;

210) detecting and de-multiplexing said downlink signal S using a multiplexing matrix $\mathbf{M}$ associated with said symbol vector $\mathbf{x} = (x(0),...,x(G - 1))$; and

220) decoding said detected and de-multiplex downlink signal S so as to obtain an estimate of an information message $\mathbf{b}_u = (b_u(0),...,b_u(K_u - 1))$ associated with said receiver device (50).

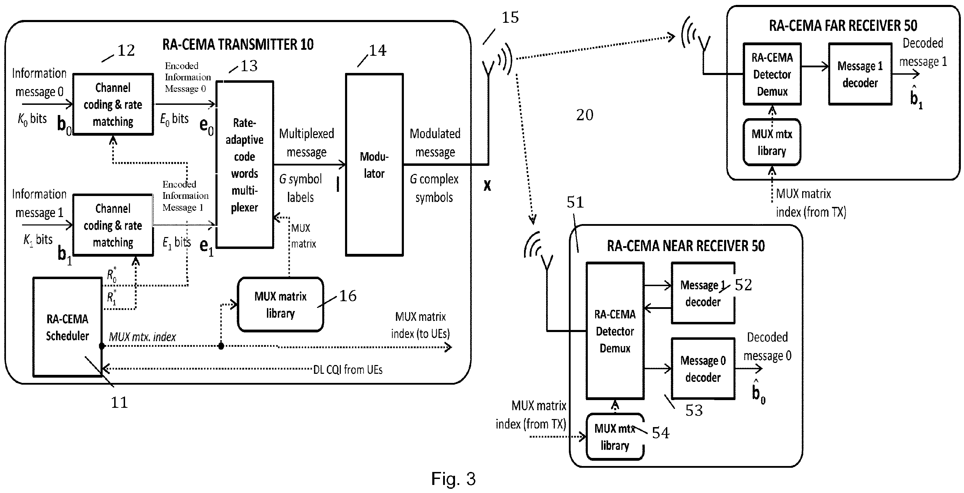

An exemplary scheme of the present RA-CEMA system in a LTE wireless communication system 20 with two receiver devices 50, also sometimes called User Equipments (UEs), is shown in Fig. 3. A scheduler 11 receives DL CQIs for the two receiver devices 50 through a reverse link (e.g., up-link) and selects receiver devices 50 having different channel qualities for concurrent DL transmission. The channel qualities may e.g. be SINR, SNR, or any other suitable channel measures, or other parameters based on such channel measures such as CQI.

The selection of receiver devices 50 having different DL channel qualities may according to another embodiment be performed with the use of one or more threshold values $Th$. It is realised that the performance of the present RA-CEMA scheme is dependent on the difference in experienced DL radio channel of the receiver devices 50. Therefore, the DL channel qualities for different receiver devices can be compared to the threshold value(s) $Th$ so as to categorize them for selection of suitable sub-groups of receiver devices for DL concurrent transmission. At least two receiver devices having different DL channel qualities should be selected for one concurrent DL transmission with the present solution. The present device and method may use one or more threshold values $Th$ which e.g. may be values in the interval of 1-15 dB or 3-15, e.g. 1, 3, 6, or 9 dB.

According to yet another embodiment the DL channel qualities or representation of the DL channel qualities are transmitted from the receiver devices 50 to the transmitter device 10. This is e.g. preferred when the system is operating in FDD mode in which the receiver devices 50 measures the DL channel and send the estimates in the uplink of e.g. a control channel. However, if the system is operating in TDD mode the same channel is used for UL and DL traffic but at different time slots. In this case the transmitter device 10 can by itself estimate the DL channel by measuring the corresponding UL channel. It should however be noted that the receiver devices 50 may transmit estimated DL channel qualities also when the system operates in the TDD mode.

In Fig. 3, a simplified exemplary scenario consisting of a near user (corresponding to a receiver device 50) having a good CQI (i.e., high SNR or SINR) and a far user having a worse CQI (i.e., low SNR or SINR) is considered. The near user corresponds to user index $u = 0$ and the far user to user index $u = 1$ in this example.

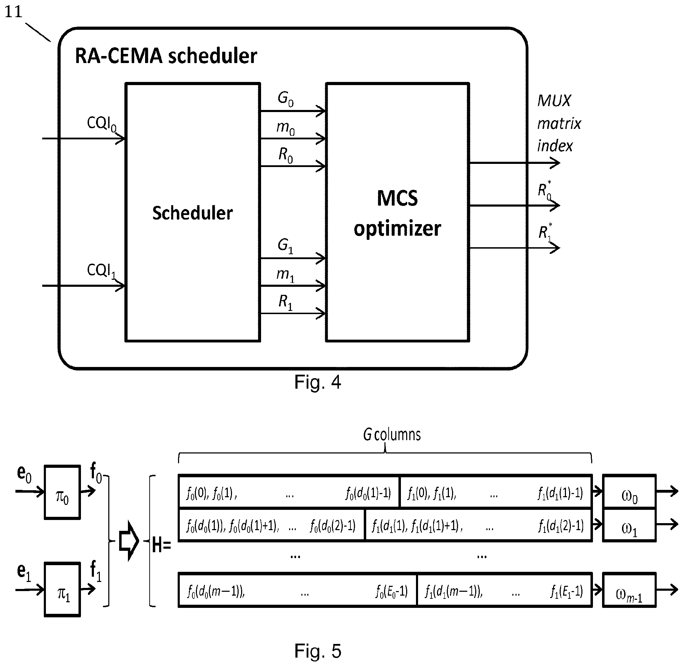

The RA-CEMA scheduler 11 of Fig. 3 is also shown in Fig. 4. The RA-CEMA scheduler 11 obtains the CQI related to all active receiver devices 50 through a reverse link and/or through local link quality assessment (e.g., in case of TDD transmission) in this case. Similar as in, for example the LTE system, the scheduler 11 decides how many REs will be allocated for transmission in a dedicated transmission interval. In that respect, the only difference is that two UEs (corresponding to the present receiver devices 50) will be served instead of one. The scheduler block shown in Fig. 4 may operate their choices independently on a per-UE basis or jointly on several UEs. In both cases, a set of parameters/values, $G_u$, $m_u$, $R_u$, will be computed for each UE (each receiver device or each user). For each UE, a conventional scheduler - similar to, for example, the scheduler of current LTE systems - is used to compute the base modulation orders ($m_0$, $m_1$), the rates ($R_0$, $R_1$) and the number of REs ($G_0$, $G_1$) that would be used in the case for orthogonal transmission. Based on this information, the Modulation and Coding Scheme (MCS) optimizer block in Fig. 4 computes the order m of the expanded constellation as

$$m = m_0 + m_1 \qquad\qquad (1)$$

and the number of REs as

$$G = \max(G_0, G_1). \hspace{2cm} (2)$$

The base code word sizes are obtained as

$$E_0^{(0)} = G m_0 \hspace{2cm} (3)$$

$$E_1^{(0)} = G m_1. $$

In order to offer increased flexibility, the actual code word sizes are allowed to have different values from those specified in the expression in (3). To this purpose, we assume that the near user is allowed to borrow $\Delta_B$ coded bits from the far user. Conversely, the far user is allowed to extend its code word length by borrowing some bits from the near user. In such case, the value of $\Delta_B$ is negative. As a result, the actual code word sizes are

$$\begin{cases} E_0 = E_0^{(0)} + \Delta_B \\ E_1 = E_1^{(0)} - \Delta_B \end{cases}. \hspace{1.5cm} (4)$$

where $\Delta_B$ is a design parameter that depends on the CQI and target rates.

Once these parameters have been computed, a corresponding multiplexing (MUX) matrix $\mathbf{M}_h$ is selected from a library of pre-designed (pre-computed) multiplexing matrices available at the RA-CEMA transmitter 10 and receivers 50. Such matrix specifies how each of the coded bits at the input of rate-adaptive code words multiplexer is assigned to a bit in the symbol label of a modulation symbol. Through the choice of matrix $\mathbf{M}_h$, the RA-CEMA scheduler selects one out of multiple possible trade-offs between near-user rate and far-user rate, or more generally for receiver experiencing different radio channels.

The message lengths $K_0^*$, $K_1^*$ used for transmission are obtained as a result of the following optimization (performed for a given matrix $\mathbf{M}_h$ in the library):

$$K_0^*, K_1^*: \max_{K_0, K_1} (SE_0 + SE_1) \hspace{1.5cm} (5)$$

where $SE_0$ (resp., $SE_1$) is the spectral efficiency of the near (resp., far) user, computed as

$$SE_u = (1 - BLER_u) \frac{K_u}{G}, \quad u \in \{N, F\}. \hspace{1.5cm} (6)$$

and $BLER_u$ is evaluated by simulation. Finally, the code rates are obtained as $R_0^* = K_0^*/E_0$ and $R_1^* = K_1^*/E_1$.

Parameters $R_0^*$ and $R_1^*$ are used to configure the channel coding and rate matching units. Together with parameters $m$ and $G$, parameters $R_0^*$ and $R_1^*$ are also used to select a multiplexing matrix $\mathbf{M}$ that will be used by the rate-adaptive code-words multiplexer to perform multiplexing of code words into vectors of symbol labels.

Information messages $\mathbf{b}_u = (b_u(0),...,b_u(K_u - 1))$ for the users are sent to the input of the RA-CEMA transmitter and encoded which gives encoded information messages $\mathbf{e}_0,...,\mathbf{e}_{u-1}$. After the messages have been encoded and rate matching has been applied, the rate-adaptive code-words multiplexer performs multiplexing of the code words into a label vector $\mathbf{l} = (l(0),...,l(G - 1))$ of $G$ symbol labels, where each label is represented by $m$ bits, and where $G$ is the number of allocated REs for transmission. The multiplexer operates according to the multiplexing matrix $\mathbf{M}$ that indicates to which bit of the $G$ symbol labels each coded bit shall be mapped.

In order to define the structure of the multiplexing matrix $\mathbf{M}$, we assume that the rate-adaptive code-words multiplexer operates as follows: first, each code word $e_u$ is interleaved according to an arbitrary user-specific permutation $\pi_u$. As a result, a permuted code word $f_u = (e_u(\pi_u(0)),...,e_u(\pi_u(E_u - 1)))$ is obtained. All permuted code words are written row-wise into a $m \times G$ matrix $\mathbf{H}$ according to a distribution $\mathbf{d}_u = (d_u(0) = 0,...,d_u(m) = E_u$: coded bits $f_0(d_0(r))$ to $f_0(d_0(r + 1) - 1$ are written sequentially to row $r$ of $\mathbf{H}$ starting from the leftmost available position and proceeding from left to right until all bits have been written. (Here, $r \in [0,...,m - 1]$). Then, coded bits $f_1(d_1(r))$ to $f_1(d_1(r + 1) - 1)$ are written to row $r$ of **H** starting from the leftmost available position and proceeding from left to right until all bits have been written. The procedure is iterated until coded bits $f_{u-1}(d_{u-1}(r))$ to $f_{u-1}(d_{u-1}(r + 1) - 1)$ have been written and row $r$ has been completely filled. After all code words have been written and the matrix **H** has been completely filled, each row is interleaved according to an arbitrary row-specific permutation $\omega_r$, $r = 0,...,m - 1$. The matrix **H** is read column-wise starting from the leftmost column, each column corresponding to a $m$-bit symbol label.

Distributions $\mathbf{d}_u$ are employed to indicate how to assign the coded bits of each code word to the rows of the matrix. In particular, $d_u(r) - d_u(r - 1)$ bits from interleaved code word $\mathbf{f}_u$ are assigned to row $r$ of **H**. The elements of $\mathbf{d}_u$ shall satisfy the following constraints:

$$d_u(0) = 0, \qquad d_u(r) \geq d_u(r - 1), \qquad d_u(m) = E_u$$

$$\sum_{u=0}^{U-1} d_u(r) - d_u(r - 1) = G, \ r \in [1, ..., m]. \tag{7}$$

The described procedure is illustrated in Fig. 5. As a result, the multiplexing procedure is defined by a set of code word permutations $\pi_u$, $u = 0, ..., U - 1$, a set of distribution vectors $\mathbf{d}_u$, $u = 0,..., U - 1$ and a set of row permutations $\omega_r$, $r = 0,...,m - 1$.

The whole multiplexing procedure can be alternatively specified using a single multiplexing matrix **M**. Each element $(\mathbf{M})_{i,j}$ of this matrix indicates the label and the bit position to which each coded bit at the multiplexing input must be mapped, where $i,j$ is a pair of indices, the first of which indicates the user and the second indicates the coded bit to be written to label $i$ in bit position $j$. Based on the information provided through **M**, the rate-adaptive code-words multiplexer can perform multiplexing and form the symbol labels in a single step.

Each multiplexing matrix **M** corresponds to different choices of parameters $G,m,E_u$, code word permutations $\pi_u$, row permutations $\omega_u$ and bit distributions $\mathbf{d}_u$. A set of such matrices is collected in a matrix library and made available to the code-words multiplexer for transmission and reception according to an embodiment.

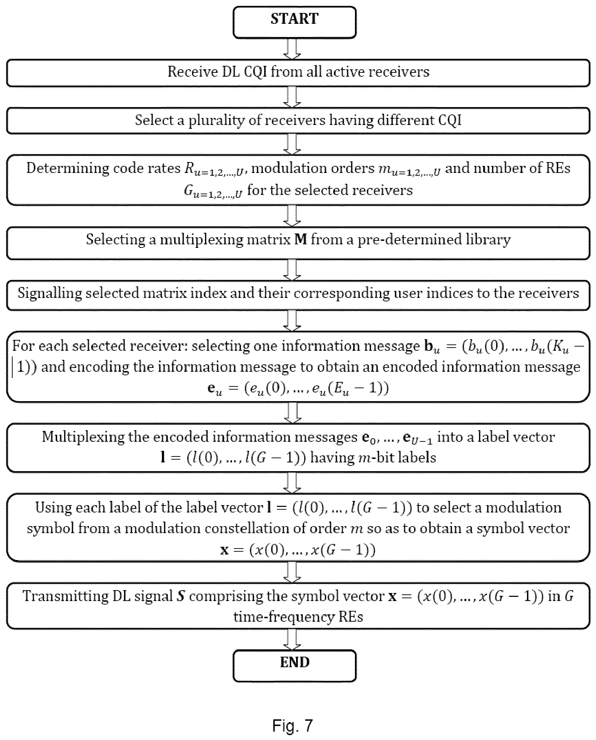

Transmission according to an embodiment comprises the following steps with reference to the flow chart of Fig. 7:

1. Receiving downlink CQI from all active receiver devices;

2. Selecting, from the set of active receiver devices, a subset of $U$ users having different CQI values;

3. Determining the order of the expanded constellation used by the modulator (modulation orders), the number of resource elements to be used for transmission and a set of coding rates as a trade-off among the rates for each receiver device;

4. Selecting from a library of available multiplexing matrices the matrix corresponding to the rates, the order of the modulation and to the number of resource elements determined in step 3 above;

5. Signalling the index of the selected multiplexing matrix to the selected $U$ receiver devices;

6. For each receiver devices $u$:

    a. Selecting one information message $\mathbf{b}_u = (b_u(0),...,b_u(K_u - 1))$; and

    b. Independently encoding and rate-matching each information message $\mathbf{b}_u$ and obtaining an encoded information message $\mathbf{e}_u = (e_u(0),...,e_u(E_u - 1))$;

7. Multiplexing all the encoded information messages $\mathbf{e}_0,...,\mathbf{e}_{U-1}$ for all the selected receiver devices into a label vector $\mathbf{l} = (l(0),...,l(G - 1))$ of $m$-bit labels;

8. Mapping the label vector to a vector of symbols drawn from the expanded constellation, thus obtaining a symbol vector $x = (x(0),...,x(G - 1))$ of $G$ complex constellation symbols; and

9. Transmitting the symbol vector $x = (x(0),...,x(G - 1))$ in $G$ time-frequency-space REs in the DL of the wireless communication system.

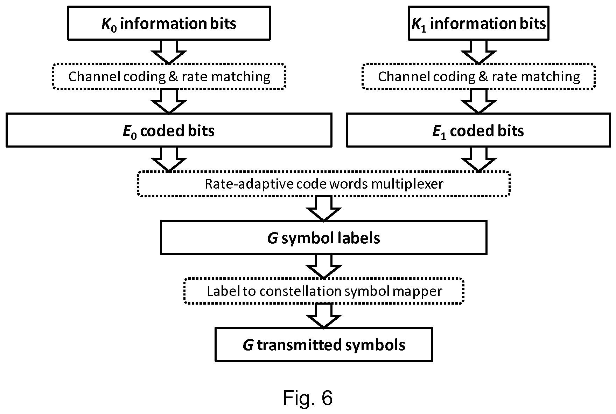

The described procedure is also illustrated in Fig. 6 where, for the case of $U = 2$ multiplexed users, the sizes of vectors at all stages of the transmission procedure are specified.

Rectangles with solid borders indicate data whilst rectangles with dashed borders and round corners indicate signal processing blocks in Fig. 6.

Following the scheme of Fig. 3, each element according to a preferred embodiment of the present (RA-CEMA) transmitter device 10 is described in detail in the following.

The "Channel coding and rate matching" block 12 of the transmitter device 10 receives a message of information bits $\mathbf{b}_u = (b_u(0),...,b_u(K_u - 1))$ from user $u$ and generates a vector of coded bits $\mathbf{e}_u = (e_u(0),...,e_u(E_u - 1))$. The code rate is defined as

$$R_u = \frac{K_u}{E_u}. \tag{8}$$

as computed by the scheduler.

Messages intended for different users are independently encoded. The RA-CEMA transmitter does not impose constraints on the channel coding technique to be employed, hence well-known techniques including but not limited to convolutional codes, parallel or serial concatenations of convolutional codes (namely, turbo codes and Serially Concatenated Convolutional Codes - SCCC), Low-Density Parity-Check (LDPC) codes or polar codes can be used. As for rate matching, techniques like periodic puncturing or pseudo-random puncturing can be used, as well as rate-matching techniques based on circular buffers like those defined in the LTE standard can be employed.

After encoding and rate-matching, an encoded information message $\mathbf{e}_u = (e_u(0),...,e_u(E_u -1))$ consisting of $E_u$ coded bits is obtained for each user. As a result

$$E_{\text{TOT}} = \sum_{u=0}^{U-1} E_u \tag{9}$$

coded bits are available at the input of the rate-adaptive code-words multiplexer 13 of transmitter device 10.

The rate-adaptive code-words multiplexer collects the code words $\mathbf{e}_0,...,\mathbf{e}_{U-1}$ and generates a vector of symbol labels $\mathbf{l} = (l(0),...,l(G - 1))$. Each label consists of $m = \log_2|\chi_{EXP}|$ bits, where $\chi_{EXP}$ indicates the expanded constellation. The total number of $m$-bit labels is therefore

$$G = \frac{E_{\text{TOT}}}{m} \tag{10}$$

where we assume that $E_{\text{TOT}}$ is an integer multiple of $m$.

After $G$ $m$-bit labels $\mathbf{l} = (l(0),...,l(G - 1))$ have been generated by the code-words multiplexer 13, the modulator block 14 of the transmitter device 10 generates a sequence of $G$ complex modulation symbols $\mathbf{x} = (x(0),...,x(G - 1))$ drawn from the expanded constellation $\chi_{EXP}$. Finally, the complex symbol vector $\mathbf{x}$ is transmitted by means of the transmitter unit 15 of the transmitter device 10 using $G$ REs in the communication system 20.

As described above, according to an embodiment the multiplexing matrix is selected from a library 16, 54 of pre-designed matrices which is available at the transmitter device 10 and at the receiver devices 50. Each matrix $\mathbf{M}_h$ corresponds to one out of multiple possible trade-offs between e.g. near-user rate and far-user rate. The matrix to be used for transmission is selected by the transmitter device 10 as a function of the rates, of the expanded constellation order $m$ and of the number of REs $G$ computed by the scheduler 11 of the transmitter device 10 as described above.

According to a further embodiment the transmitter device 10 signals an indication of the selected multiplexing matrix to the receiver devices 50. The signalling may preferably indicate a library index of the selected matrix which is signalled to the scheduled users through e.g. a DL control channel. According to yet another embodiment the transmitter device 10 is further arranged to signal to each of the receiver devices 50 their receiver device indices $u = 1,2,...,U$. In fact, for detection and de-multiplexing according to this embodiment, the receiver device should know both the multiplexing matrix $\mathbf{M}$ that has been used in DL transmission and the receiver device index in order to be able to separate the coded bits of each receiver.

The multiplexing matrices have $m$ rows and $G$ columns. Each column corresponds to a $m$-bit label. Each row corresponds to a bit in the $m$-bit label. The characteristics of the multiplexing matrix $\mathbf{M}$ determine the performance of the present RA-CEMA system. To explain the relationship between these characteristics and the performance of the RA-CEMA system, we refer to a system with two users (the two receiving devices 50) as shown in Fig. 3: a near user whose receiver performs SIC, and a far user, whose receiver does not perform SIC similar to the scheme shown in Fig. 1.

The improved SE for the near user is achieved thanks to the SIC algorithm. For the SIC to be effective, the near and far signals must interfere. In fact, in absence of interference (i.e., near and far user signals are orthogonal), cancellation is totally ineffective. We conclude that good multiplexing schemes are those that generate as much interference as possible between the near user and the far user. This can be achieved by maximizing the number of labels that are shared among the users.

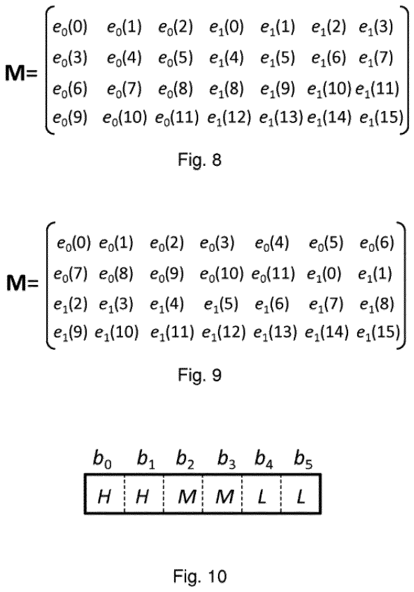

As an example, the multiplexing matrix in Fig. 8 corresponds to an orthogonal multiplexing: the coded bits of user $u = 0$ and the coded bits of user $u = 1$ are mapped to different labels (i.e., different columns), hence they are transmitted using independent modulation symbols. No column of such matrix takes coded bits from both code words, therefore interference is avoided. In this case, SIC is totally ineffective. For this reason, such kind of multiplexing schemes are not used in embodiments of the present invention.

If, instead, the same two code words are mapped according to the multiplexing matrix of Fig. 9, we have interference between user $u = 0$ and user $u = 1$ signals. In this case, interference is maximized, since all columns contain coded bits from both code words. In this case, SIC at the near receiver yields improved performance, resulting in an increased SE.

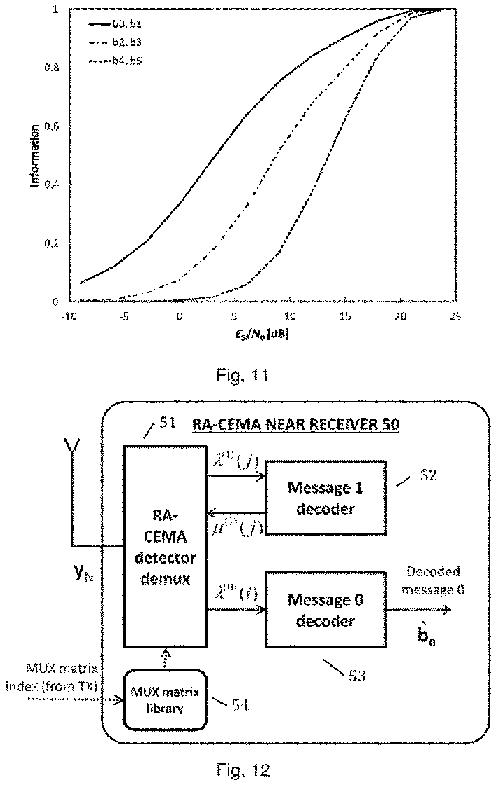

As a remarkable characteristic of any modulation scheme, each bit in the label of its constellation conveys a different amount of information. We consider, as an example, a 64QAM modulation with Gray binary labelling as defined in the LTE standard. The m-bit label is shown in Fig. 10. When a sequence of 64QAM symbols is transmitted on the Additive White Gaussian Noise (AWGN) channel, each of the six bits conveys a different amount of information, which is a function of the signal-to-noise ratio $E_S/N_0$. Fig. 11 shows the amount of information conveyed by each of the six bits of 64QAM. A higher amount of information results in a better protection against errors, hence we call these bits highly protected (H). Similarly, mid-protected (M) bits exhibit an intermediate level of error protection, while the bits with a lower amount of conveyed information are called less protected (L) bits.

The AW-NOMA scheme features a degree of freedom corresponding to the near-user weight $\alpha$. Optimizing the value of $\alpha$, it is possible to flexibly trade-off near-user rate and far-user rate. The RA-CEMA does not feature a similar degree of freedom. However, assuming that a modulation with different error protection levels is available, the coded bits can be flexibly assigned to different protection levels. The result in performance is similar to changing the value of $\alpha$. For example, mapping the far-user code word to highly protected bits yields a higher SE for the far user. Weaker bits will be assigned to the near user code word, yielding a lower SE for the near user. Changing the assignment of coded bits to label bits with different error protection levels allows us to trade-off near-user SE and far-user SE. In AW-NOMA, the same trade-off is achieved by changing the value of $\alpha$.

The example RA-CEMA system of Fig. 3 comprises the transmitter 10 and the two receivers 50: a near receiver having by a good CQI (i.e., high SNR) and a far receiver having a worse CQI (i.e., low SNR). The higher SNR experienced by the near receiver allows performing SIC in the near receiver as shown in Fig. 12.

The RA-CEMA detector 51 of the receiver device 50 in Fig. 12 computes soft information of the symbols of the expanded constellation. Such soft information is, for example, a log-likelihood ratio (LLR)

$$\lambda_n(k) = \log\frac{P\big(x(k) = s_n\big|y_N(k)\big)}{P\big(x(k) = s_0\big|y_N(k)\big)}, k = 0, \dots, G; \; n = 0, \dots, M-1 \qquad (11)$$

where $x(k)$ is the symbol transmitted at time $k$ by the RA-CEMA transmitter, $s_n \in \chi$ is a symbol of the expanded constellation and $y_N(k)$ is the complex sample received by the near (N) user at time $k$. Alternatively, soft information can be represented by logarithms of probability values, likelihood ratios or probability values.

After computing $\lambda_n(k)$, the RA-CEMA detector 51 computes the binary LLRs of coded bits $\mathbf{e_1} = (e_1(0),...,e_1(E_1 - 1))$ as

$$\lambda^{(1)}(j) = \log\frac{P(e_1(j) = 1|y_N(k))}{P(e_1(j) = 0|y_N(k))}, j = 0, \dots, E_1 - 1 \qquad (12)$$

and sends these to the "message 1" decoder 52 of the receiver device 50 shown in Fig. 12. The message 1 decoder applies code constraints and computes updated soft LLRs $\mu^{(1)}(j)$ of coded bits $\mathbf{e_1}$. These updated LLRs are sent back to the RA-CEMA detector 51 and are used to improve the soft information $\lambda_n(k)$ of the transmitted symbols.

The RA-CEMA detector 51 computes the binary soft values related to coded bits $\mathbf{e_0} = (e_0(0),...,e_0(E_0 - 1))$ of message 0 as

EP 3 123 684 B1

$$\lambda^{(0)}(i) = \log \frac{\mathrm{P}(e_0(i) = 1 | y_N(k))}{\mathrm{P}(e_0(i) = 0 | y_N(k))}, i = 0, ..., E_0 - 1 \qquad (13)$$

and sends these to the "message 0" decoder 53 of the receiver device 50 shown in Fig. 12. The "message 0" decoder applies code constraints and computes an estimate of information bits $\mathbf{b}_0 = (b_0(0),...,b_0(K_0 - 1))$.

At the far receiver, the RA-CEMA detector 51 computes soft information on the transmitted symbols $\lambda_n(/k)$ as in (11) with $y_N(k)$ replaced by $y_F(k)$; then, binary soft values related to coded bits $\mathbf{e}_1 = (e_1(0),...,e_1(E_1 - 1))$ are computed as in equation (12) with $y_N(k)$ replaced by $y_F(k)$. Finally, the message 1 decoder applies the code constraints and computes an estimate of information bits $\mathbf{b}_1 = (b_1(0),...,b_1(K_1 - 1))$.

A system consisting of a RA-CEMA transmitter 10 and two receivers 50 as shown in Fig. 3 has been considered for performance evaluation of embodiments of the present invention. The far user ($u = 1$) is having $E_{S,F}/N_0 = 6$ dB and the near user ($u = 0$) has $E_{S,N}/N_0 = 12$ dB. Channel coding and rate matching are performed according to the LTE standard for turbo coding. Each block consists of $G = 240$ modulation symbols that are transmitted in as many REs using 64QAM.

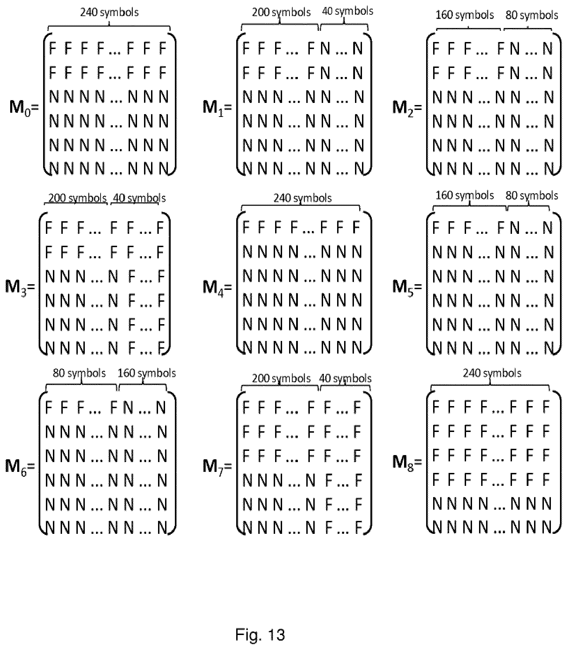

The multiplexing matrix library consists of the nine matrices shown in Fig. 13, where it is assumed that the constellation's labels are ordered as follows: the first two rows of each matrix correspond to the two highly protected bits of 64QAM; the following two rows correspond to the two mid-protected bits and the last two rows correspond to less-protected bits.

For compactness reasons, in Fig. 13 multiplexing matrices have been specified using a simplified notation with respect to the notation previously used in Fig. 8 and in Fig. 9: here, the generic element of each matrix indicates the near user or the far user ($u \in \{N,F\}$) to which the assigned coded bit belongs. Code words are written column-wise following the scheme represented by the selected multiplexing matrix.

Storing the multiplexing matrix library 16, 54 at the transmitter and at the receivers may require a large amount of memory. A more compact representation is given hereinafter which reduces the memory needed. We introduce matrix templates and asset of parameters that permits storage of the library in a more limited space. The library of Fig. 13 can be compressed into two template matrices and a small table of parameters.

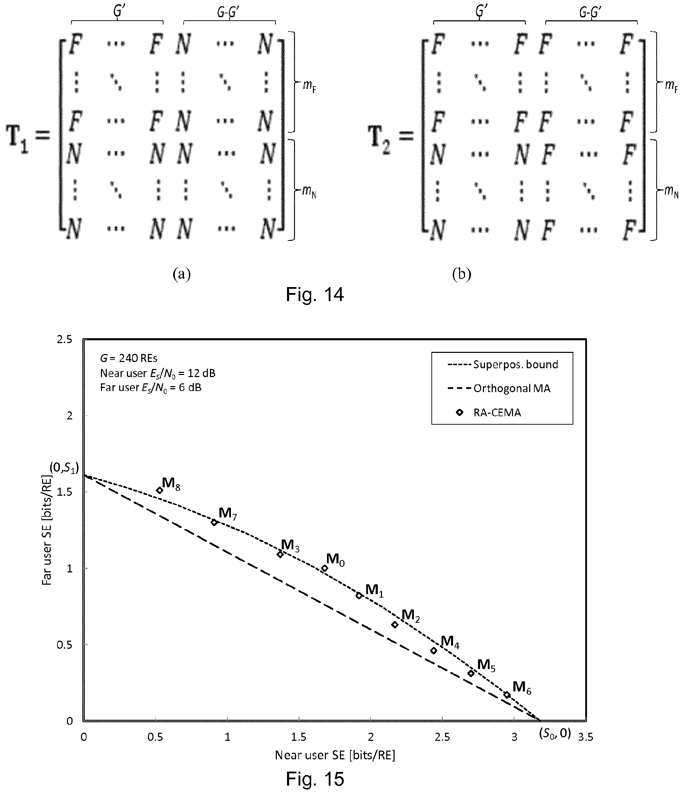

We define a pair of template matrices $\mathbf{T}_q$ having size $m \times G$, where $m = m_1 + \cdots + m_U$ and $G = \max(G_1,...,G_U)$ and two such matrices are shown in Fig. 14. Each matrix has $m = m_N + m_F$ rows and $G = \max(G_N, G_F)$ columns in this "near and far" case. In the first $G'$ columns, both coded bits of the far and near user are multiplexed, while in the remaining columns only coded bits from the far user or near user are assigned. Each matrix in the library can be generated starting from one of the templates using parameters: $G, G', m_F, m_N$, where $G'$ is a design parameter which can be obtained through computer based simulations. The design parameter has a value in the range from 1 to $G$. Table 1 shows the parameter values that compactly represent the whole library of Fig. 13.

**Table 1:** Multiplexing matrix library

| Tag | Template | $m_F$ | $m_N$ | $G$ | $G'$ |
|-----|----------|-------|-------|-----|------|
| M0 | $\mathbf{T}_1$ | 2 | 4 | 240 | 240 |
| M1 | $\mathbf{T}_1$ | 2 | 4 | 240 | 200 |
| M2 | $\mathbf{T}_1$ | 2 | 4 | 240 | 160 |
| M3 | $\mathbf{T}_2$ | 2 | 4 | 240 | 200 |
| M4 | $\mathbf{T}_1$ | 1 | 5 | 240 | 240 |
| M5 | $\mathbf{T}_1$ | 1 | 5 | 240 | 160 |
| M6 | $\mathbf{T}_1$ | 1 | 5 | 240 | 80 |
| M7 | $\mathbf{T}_2$ | 3 | 3 | 240 | 200 |
| M8 | $\mathbf{T}_1$ | 4 | 2 | 240 | 240 |

Fig. 15 shows the achieved spectral efficiencies of this solution. Each point in Fig. 15 represents a pair of SE values that can be simultaneously achieved by both users. The point ($S_0$,0) on the x-axis corresponds to the spectral efficiency achievable when transmitting message 0 to user $u = 0$ and no message to user $u = 1$. Similarly, point (0,$S_1$) on the y-axis corresponds to the spectral efficiency achievable when transmitting message 1 to user $u = 1$ and no messages to user $u = 0$. The line labelled "Orthogonal MA" joins these two points and corresponds to the spectral efficiency pairs ($S_0$,$S_1$) that can be achieved using orthogonal MA schemes (e.g., Time-Division Multiple Access - TDMA).

The curve labelled "Superposition bound" corresponds to the pairs of SE that can be achieved by an ideal transmission scheme that achieves SE pairs $(S_0,0)$ and $(0,S_1)$, In this context, "ideal transmission scheme" refers to a scheme using Gaussian signalling, infinite code word lengths and performing perfect far-user signal cancellation at the near user's receiver. The curve has been obtained as follows:

- Compute the SNR $\rho_0$ corresponding to AWGN channel capacity $C(\rho_0) = S_0$;
- Compute the SNR $\rho_1$ corresponding to AWGN channel capacity $C(\rho_1) = S_1$;
- The points $(x,y)$ on the "Superposition bound" curve is obtained as

$$x = C(\alpha\rho_0)$$

$$y = C\left(\frac{(1-\alpha)\rho_1}{\alpha\rho_1 + 1}\right)$$

(14)

and $C(z) = \log_2(1 + z)$ is the capacity of the AWGN channel with SNR equal to z.

Points labelled "RA-CEMA" are the SE pairs achieved using the method herein disclosed with the matrix library of Fig. 12. These points correspond to SE pairs above the "Orthogonal MA" line, therefore they cannot be achieved using orthogonal MA schemes.

The performance of RA-CEMA has been compared with AW-NOMA in terms of achievable rate pairs. Here, the far user ($u = 1$) is has $E_{S,F}/N_0 = 6$ dB and the near user ($u = 0$) has $E_{S,N}/N_0 = 12$ dB. Channel coding and rate matching are performed according to the LTE standard for turbo coding. Each block consists of $G = 240$ modulation symbols that are transmitted in as many REs. A rate pair is considered achievable if both users experience a block error rate below a given threshold: $BLER \leq 10^{-1}$.

The considered modulation and coding schemes (MCS) are shown in Table 2. These schemes are a subset of those defined in the LTE standard. For each MCS, the BLER vs. $E_S/N_0$ characteristic has been evaluated through Monte Carlo simulation and the minimum value of $E_S/N_0$ needed to achieve $BLER \leq 10^{-1}$ has been recorded (see "$E_S/N_0$ min." columns in Table 2).

**Table 2:** Modulation and coding schemes

| Index | Mod. type | Inform. word length | MCS rate | $E_S/N_0$ min. [dB] | Index | Mod. type | Inform. word length | MCS rate | $E_S/N_0$ min. [dB] |
|---|---|---|---|---|---|---|---|---|---|
| 1 | QPSK | 96 | 0.4 | -2.8 | 18 | 16QAM | 368 | 1.533333 | 4.7 |
| 2 | QPSK | 112 | 0.466667 | -2.1 | 19 | 16QAM | 384 | 1.6 | 5 |
| 3 | QPSK | 128 | 0.533333 | -1.6 | 20 | 16QAM | 400 | 1.666667 | 5.3 |
| 4 | QPSK | 144 | 0.6 | -1.1 | 21 | 16QAM | 416 | 1.733333 | 5.5 |
| 5 | QPSK | 160 | 0.666667 | -0.8 | 22 | 16QAM | 432 | 1.8 | 5.8 |
| 6 | QPSK | 176 | 0.733333 | -0.3 | 23 | 16QAM | 448 | 1.866667 | 6.1 |
| 7 | QPSK | 192 | 0.8 | 0.2 | 24 | 16QAM | 464 | 1.933333 | 6.4 |
| 8 | QPSK | 208 | 0.866667 | 0.7 | 25 | 16QAM | 480 | 2 | 6.6 |
| 9 | QPSK | 224 | 0.933333 | 1.1 | 26 | 16QAM | 512 | 2.133333 | 7.1 |
| 10 | QPSK | 240 | 1 | 1.5 | 27 | 16QAM | 544 | 2.266667 | 7.7 |
| 11 | QPSK | 256 | 1.066667 | 2 | 28 | 16QAM | 576 | 2.4 | 8.2 |
| 12 | QPSK | 272 | 1.133333 | 2.3 | 29 | 16QAM | 608 | 2.533333 | 8.8 |
| 13 | QPSK | 288 | 1.2 | 2.8 | 30 | 16QAM | 640 | 2.666667 | 9.3 |
| 14 | QPSK | 304 | 1.266667 | 3.2 | 31 | 16QAM | 672 | 2.8 | 9.8 |
| 15 | QPSK | 320 | 1.333333 | 3.6 | 32 | 16QAM | 704 | 2.933333 | 10.3 |
| 16 | QPSK | 336 | 1.4 | 4 | 33 | 16QAM | 736 | 3.066667 | 10.8 |

(continued)

| Index | Mod. type | Inform. word length | MCS rate | $E_S/N_0$ min. [dB] | Index | Mod. type | Inform. word length | MCS rate | $E_S/N_0$ min. [dB] |
|---|---|---|---|---|---|---|---|---|---|
| 17 | QPSK | 352 | 1.466667 | 4.4 | 34 | 16QAM | 768 | 3.2 | 11.3 |

The achievable AW-NOMA rate pairs have been found using the following approach, as proposed in conventional solutions:

1. Define a quality constraint to be satisfied for a set of rates to be considered achievable. As an example, we choose $BLER \leq 10^{-1}$.
2. For each MCS $l \in [1,...,34]$, determine the minimum SNR $\rho(l)$ needed to satisfy the quality constraint in a single-user transmission.
3. For each MCS $l \in [1,...,34]$

   a. For the near user, set MCS $l$
   b. Set $\alpha = \rho(l)/(E_{S,N}/N_0)$
   c. For the far user, choose the highest-rate MCS among those that satisfy the quality constraint with $\rho(l) < (1 - \alpha)E_{S,F}/N_0$
   d. Calculate the BLER

      i. If the rate pair is achievable at both the users, increment $l$ and go back to step 3.a.
      ii. If the rate pair is achievable at the far user, but not at the near user, increase $\alpha$ of $\Delta_\alpha$ dB and go back to step 3.d.
      iii. If the rate pair is achievable at the near user, but not at the far user, choose a MCS with lower rate for the far user and go back to step 3.d.
      iv. If the rate pair is unachievable at both the users, choose a MCS with lower rate for the far user, increase $\alpha$ of $\Delta_\alpha$ dB and go back to step 3.d.

The step value $\Delta_\alpha$ used to increase $\alpha$ must be carefully chosen relative to the characteristics of the MCS set. In particular, $\Delta_\alpha$ should be smaller than the distance in dB between the BLER characteristics of two consecutive MCS. From Table 2, we see that the smallest distance is 0.2 dB (between MCS 20 and MCS 21, and between MCS 24 and MCS 25), therefore we use $\Delta_\alpha$ = 0.1dB.

Concerning the present solution (RA-CEMA) the described procedure cannot be applied because parameter $\alpha$ is not available. Therefore, in order to perform comparisons with AW-NOMA, we perform by simulation the following optimization:

$$R_N^*, R_F^*: \max_{\mathbf{M}=\mathbf{M}_h} (R_N + R_F) \qquad (15)$$

where $M_i$ is the i-th multiplexing matrix, while $R_N$ (resp. $R_F$) is the MCS rate of the near (resp. far) user. Results for the above are shown in Fig. 16. We notice that RA-CEMA approaches the same rates of AW-NOMA and, in some cases, exhibits better performance.

Furthermore, as described above the present invention also relates to corresponding methods in a transmitter and receiver. Any method according to the present invention may be implemented in a computer program, having code means, which when run by processing means causes the processing means to execute the steps of the method. The computer program is included in a computer readable medium of a computer program product. The computer readable medium may comprises of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that the present transmitter device 10 and receiver device 50 each comprises the necessary communication capabilities in the form of e.g., functions, means, units, elements, etc., for executing the present method. Examples of other such means, units, elements and functions are: processors, memory, encoders, decoders, mapping units, multipliers, interleavers, de-interleavers, modulators, demodulators, inputs, outputs, antennas, amplifiers, RX unit, TX unit, DSPs, MSDs, TCM encoder, TCM decoder, interfaces, communication protocols, etc. which are suitably arranged together. Examples of transmitter devices are base stations, remote radio heads, relay devices, access points or any other network control nodes having the corresponding capabilities. Further, receiver devices are any communication devices adapted to receive DL signals in a wireless communication system and may e.g. be a UE in an LTE system. The present solution is also easily combined with other transmission techniques of conventional solution such as Multiple Input Multiple Output (MIMO) and Orthogonal Frequency Division Multiplexing (OFDM).

Especially, the processors of the present user device or access node device may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the present invention is not limited to the embodiments described above, but also relates to and incorporates all embodiments within the scope of the appended independent claims.

## Claims

1. Transmitter device (10) adapted to:

   select a plurality of user receiver devices (50) $u = 1,2,...,U$ having different downlink channel qualities;
   determine for each user a code rate $R_u$, a modulation order $m_u$, and a number of Resource Elements, REs, $G_u$;
   obtain an $m \times G$ non-orthogonal multiplexing matrix $\mathbf{M}$ based on the determined code rates $R_{u=1,2,...,U}$, modulation orders $m_{u=1,2,...,U}$ and number of REs $G_{u=1,2,...,U}$ for said plurality of receiver devices (50), where $m = m_1 + m_2 + \cdots + m_U$ is the order of an expanded modulation constellation and $G = \max(G_1,G_2,...,G_U)$ is the number of allocated REs for transmission;
   independently encode for each receiver device (50) an information message $\mathbf{b}_u = (b_u(0),..., b_u(K_u - 1))$ so as to obtain an encoded information message $\mathbf{e}_u = (e_u(0),...,e_u(E_u - 1))$, where the length $E_u$ of each encoded information message is computed as $E_u = G \cdot m_u + \Delta_B$, where $\Delta_B$ is a parameter that depends on the downlink channel quality and the target code rate of each user;
   multiplex the encoded information messages $\mathbf{e}_0,...,\mathbf{e}_{U-1}$ into a label vector $\mathbf{l} = (l(0),...,l(G - 1))$ having $G$ $m$-bit labels $l$ based on said multiplexing matrix $\mathbf{M}$, where the encoded information messages are written row-wise or column-wise into the multiplexing matrix $\mathbf{M}$, each element $(M)_{i,j}$ of said multiplexing matrix $\mathbf{M}$ indicates the label and the bit position to which each coded bit at the multiplexing input must be mapped, and at least two column elements of at least one column of said multiplexing matrix $\mathbf{M}$ are associated with different receiver devices;
   using each label of said label vector $\mathbf{l} = (l(0),...,l(G - 1))$, which is column-wise read from the multiplexing matrix $\mathbf{M}$, to select a modulation symbol from a modulation constellation of order m so as to obtain a symbol vector $\mathbf{x} = (x(0),...,x(G - 1))$ for said multiplexed encoded information messages $\mathbf{e}_0,...,\mathbf{e}_{U-1}$; and
   transmit a downlink signal $S$ comprising said symbol vector $\mathbf{x} = (x(0),...,x(G - 1))$.

2. Transmitter device (10) according to claim 1, further adapted to:

   receive the downlink channel qualities from said plurality of receiver devices (50); and/or
   estimate the downlink channel qualities by measuring corresponding uplink channels for said plurality of receiver devices (50).

3. Transmitter device (10) according to claim 2, wherein the downlink channel qualities are based on Signal-to-Noise Ratio, SNR, or Signal-to-Interference and Noise Ratio, SINR, estimations.

4. Transmitter device (10) according to any of the preceding claims, further adapted to obtain said multiplexing matrix $\mathbf{M}$ from a pre-computed library (16) comprising a plurality of multiplexing matrices $\mathbf{M}_h$ or representations thereof.

5. Transmitter device (10) according to claim 4, further adapted to signal an indication of said multiplexing matrix $\mathbf{M}$ to said plurality of receiver devices (50).

6. Transmitter device (10) according to claim 5, wherein said indication is an index in said pre-computed library (16) for said multiplexing matrix $\mathbf{M}$, and further being adapted to signal to each of said plurality of receiver devices (50) their respective associated receiver device index $u = 1,2,...,U$.

7. Transmitter device (10) according to claim 1, further adapted to transmit said downlink signal $S$ with $G$ REs.

8. A wireless communications system, comprising:

   one transmitter device according to any one of claims 1-7; and
   a plurality of receiver devices (50), where each receiver device is adapted to:

   receive said downlink signal $S$;
   detect and de-multiplex said downlink signal S using said non-orthogonal multiplexing matrix **M** associated with said symbol vector **x** and
   decode said detected and de-multiplexed downlink signal $S$ so as to obtain an estimate of the information message.

9. Transmission method, comprising the steps of:

   selecting (100) a plurality of user receiver devices (50) $u = 1,2,..., U$ having different downlink channel qualities;
   determining (110) for each user a code rate $R_u$, a modulation order $m_u$, and a number of Resource Elements, REs, $G_u$;
   obtaining (120) an $m \times G$ non-orthogonal multiplexing matrix **M** based on the determined code rates $R_{u=1,2,...,U}$, modulation orders $m_{u=1,2,...,U}$ and number of REs $G_{u=1,2,...,U}$ for said plurality of receiver devices (50),3 where $m = m_1 + m_2 + \cdots + m_U$ is the order of an expanded modulation constellation and $G = \max(G_1, G_2,..., G_U)$ is the number of allocated REs for transmission;
   independently encoding (130) for each receiver device (50) an information message $\mathbf{b}_u = (b_u(0),...,b_u(K_u - 1))$ so as to obtain an encoded information message $\mathbf{e}_u = (e_u(0),...,e_u(E_u - 1))$, where the length $E_u$ of each encoded information message is computed as $E_u = G \cdot m_u + \Delta_B$, where $\Delta_B$ is a parameter that depends on the downlink channel quality and the target code rate of each user;
   multiplexing (140) the encoded information messages $\mathbf{e}_0,...,\mathbf{e}_{U-1}$ into a label vector $\mathbf{l} = (l(0),...,l(G - 1))$ having $G$ $m$-bit labels $l$ based on said multiplexing matrix M, where the encoded information messages are written row-wise or column-wise into the multiplexing matrix **M**, each element $(M)_{i,j}$ of said multiplexing matrix **M** indicates the label and the bit position to which each coded bit at the multiplexing input must be mapped, and at least two column elements of at least one column of said multiplexing matrix **M** are associated with different receiver devices;
   using (150) each label of said label vector $\mathbf{l} = (l(0),...,l(G - 1))$, which is column-wise read from the multiplexing matrix **M,** to select a modulation symbol from a modulation constellation of order m so as to obtain a symbol vector $\mathbf{x} = (x(0),...,x(G - 1))$ for said multiplexed encoded information messages $\mathbf{e}_0,...,\mathbf{e}_{U-1}$; and
   transmitting (160) a downlink signal $S$ comprising said symbol vector $\mathbf{x} = (x(0),...,x(G - 1))$.

10. A computer program comprising instructions which, when the program is executed by a computer, cause the computer to carry out the method of claim 9.

**Patentansprüche**

1. Sendervorrichtung (10), angepasst zum:

   Auswählen mehrerer Benutzerempfängervorrichtungen (50) $u = 1,2,...,U$ mit unterschiedlichen Downlinkkanalqualitäten;
   Bestimmen einer Coderate $R_u$, einer Modulationsordnung $m_u$ und einer Anzahl von Ressourcenelementen, REs, $G_u$ für jeden Benutzer;
   Erhalten einer $m \times G$ nicht-orthogonalen Multiplexmatrix **M** basierend auf den bestimmten Coderaten $R_{u=1,2,...,U}$, Modulationsordnungen $m_{u=1,2,...,U}$ und Anzahl der REs $G_{u=1,2,...,U}$ für die mehreren Empfängervorrichtungen (50), wobei $m = m_1 + m_2 +...+ m_U$ ist die Ordnung einer erweiterten Modulationskonstellation und $G = max(G_1, G_2,..., G_U)$ ist die Anzahl der zugeordneten REs zum Senden;
   unabhängige Kodierung für jede Empfängervorrichtung (50) einer Informationsmeldung $\mathbf{b}_u = (b_u(0),...,b_u(K_u - 1))$, um eine kodierte Informationsmeldung $\mathbf{e}_u = (e_u(0),...,e_u(E_u - 1))$ zu erhalten, wobei die Länge $E_u$ jeder kodierten Informationsmeldung als $E_u = G \cdot m_u + \Delta_B$ berechnet wird, wobei $\Delta_B$ ein Parameter ist, der von der Downlinkkanalqualität und der Soll-Coderate jedes Benutzers abhängt;
   Multiplexen der kodierten Informationsmeldungen $\mathbf{e}_0,...,\mathbf{e}_{U-1}$ in einen Etikettenvektor $\mathbf{l} = (l(0),...,l(G - 1))$ mit $G$

*m*-Bit-Etiketten **l** / basierend auf der Multiplexmatrix **M**, wobei die kodierten Informationsmeldungen zeilen- oder spaltenweise in die Multiplexmatrix **M** geschrieben werden, wobei jedes Element $(M)_{i,j}$ der Multiplexmatrix **M** das Etikett und die Bitposition angibt, auf die jedes kodierte Bit am Multiplexing-Eingang gemappt werden muss, und mindestens zwei Spaltenelemente von mindestens einer Spalte der Multiplexmatrix **M** verschiedenen Empfängervorrichtungen zugeordnet sind;

Verwenden jedes Etiketts des Etikettenvektors **l**=(*l*(0),...,*l*(G - 1)), das spaltenweise aus der Multiplexmatrix **M** gelesen wird, um ein Modulationssymbol aus einer Modulationskonstellation der Ordnung m auszuwählen, um einen Symbolvektor **x** = (*x*(0),...,*x*(G - 1)) für die gemultiplexten kodierten Informationsmeldungen $e_0,...,e_{U-1}$ zu erhalten; und

Senden eines Downlink-Signals **S**, das den Symbolvektor **x** = (*x*(0),...,*x*(G - 1)) umfasst.

2. Sendervorrichtung (10) nach Anspruch 1, ferner angepasst zum:
Empfangen der Downlinkkanalqualitäten von den mehreren Empfängervorrichtungen (50); und/oder Schätzen der Downlinkkanalqualitäten durch Messen entsprechender Uplink-Kanäle für die mehreren Empfängervorrichtungen (50).

3. Sendervorrichtung (10) nach Anspruch 2, wobei die Downlinkkanalqualitäten auf Schätzungen des Signal-Rausch-Verhältnisses, SNR oder des Signal-Interferenz- und Rausch-Verhältnisses, SINR, basieren.

4. Sendervorrichtung (10) nach einem der vorhergehenden Ansprüche, ferner angepasst, um die Multiplexmatrix **M** aus einer vorberechneten Bibliothek (16) zu erhalten, die mehrere Multiplexmatrizen $\mathbf{M}_h$ oder Darstellungen davon umfasst.

5. Sendervorrichtung (10) nach Anspruch 4, ferner angepasst, um eine Anzeige der Multiplexmatrix **M** an die mehreren Empfängervorrichtungen (50) zu signalisieren.

6. Sendervorrichtung (10) nach Anspruch 5, wobei die Anzeige ein Index in der vorberechneten Bibliothek (16) für die Multiplexmatrix **M** ist und ferner angepasst ist, um an jede der mehreren Empfängervorrichtungen (50) ihren jeweiligen zugeordneten Empfängervorrichtungsindex *u* = 1,2,...,*U* zu signalisieren.

7. Sendervorrichtung (10) nach Anspruch 1, ferner angepasst, um das Downlink-Signal **S** mit *G* REs zu übertragen.

8. Drahtloses Kommunikationssystem, umfassend:

eine Sendervorrichtung nach einem der Ansprüche 1-7; und
mehrere Empfängervorrichtungen (50), wobei jede Empfängervorrichtung angepasst ist zum:

Empfangen des Downlink-Signals **S**,
Erfassen und Demultiplexen des Downlink-Signals **S** unter Verwendung der dem Symbolvektor **x** zugeordneten nicht-orthogonalen Multiplexmatrix **M** und
Dekodieren des erfassten und demultiplexten Downlink-Signals **S**, um eine Schätzung der Informationsmeldung zu erhalten.

9. Sendeverfahren, umfassend die Schritte:

Auswählen (100) mehrerer Benutzerempfängervorrichtungen (50) *u* = 1,2,...,*U* mit unterschiedlichen Downlinkkanalqualitäten;
Bestimmen (110) einer Coderate $R_u$, einer Modulationsordnung $m_u$ und einer Anzahl von Ressourcenelementen, REs, $G_u$ für jeden Benutzer;
Erhalten (120) einer $m \times G$ nicht-orthogonalen Multiplexmatrix **M** basierend auf den bestimmten Coderaten $R_{u=1,2,...,U}$, Modulationsordnungen $m_{u=1,2,...,U}$ und Anzahl der REs $G_{u=1,2,...,U}$ für die mehreren Empfängervorrichtungen (50), wobei $m = m_1 + m_2 + ... + m_U$ die Ordnung einer erweiterten Modulationskonstellation ist und $G = max(G_1, G_2,...,G_U)$ die Anzahl der zugeordneten REs zum Senden ist;
unabhängige Kodierung (130) für jede Empfängervorrichtung (50) einer Informationsmeldung $\mathbf{b}_u = (b_u(0),...,b_u(K_u - 1))$, um eine kodierte Informationsmeldung $\mathbf{e}_u = (e_u(0),...,e_u(E_u - 1))$ zu erhalten, wobei die Länge $E_u$ jeder kodierten Informationsmeldung als $E_u = G \cdot m_u + \Delta_B$ berechnet wird, wobei $\Delta_B$ ein Parameter ist, der von der Downlinkkanalqualität und der Soll-Coderate jedes Benutzers abhängt;
Multiplexen (140) der kodierten Informationsmeldungen $\mathbf{e}_0,...,\mathbf{e}_{U-1}$ in einen Etikettenvektor **l** = (*l*(0),...,*l*(G - 1)) mit *G m*-Bit-Etiketten **l** / basierend auf der Multiplexmatrix **M**, wobei die kodierten Informationsmeldungen zeilen-oder spaltenweise in die Multiplexmatrix **M** geschrieben werden, wobei jedes Element $(M)_{i,j}$ der Multiplexmatrix **M** das Etikett und die Bitposition angibt, auf die jedes kodierte Bit am Multiplexing-Eingang gemappt werden muss, und mindestens zwei Spaltenelemente von mindestens einer Spalte der Multiplexmatrix **M** verschiedenen Empfängervorrichtungen zugeordnet sind;

Verwenden (150) jedes Etiketts des Etikettenvektors **l** = (*l*(0),...,*l*(*G* - 1)), das spaltenweise aus der Multiplexmatrix **M** gelesen wird, um ein Modulationssymbol aus einer Modulationskonstellation der Ordnung m auszuwählen, um einen Symbolvektor **x** = (*x*(0),...,*x*(*G* - 1)) für die gemultiplexten kodierten Informationsmeldungen $\mathbf{e}_0,...,\mathbf{e}_{U-1}$ zu erhalten; und

Senden (160) eines Downlink-Signals **S**, das den Symbolvektor **x** = (*x*(0),...,*x*(*G*-1)) umfasst.

**10.** Computerprogramm, umfassend Anweisungen, die, wenn das Programm von einem Computer ausgeführt wird, den Computer veranlassen, das Verfahren nach Anspruch 9 durchzuführen.

**Revendications**

1. Dispositif émetteur (10) conçu pour :

   sélectionner une pluralité de dispositifs récepteurs d'utilisateur (50) *u* = 1, 2, ..., *U* ayant différentes qualités de canal de liaison descendante ;

   déterminer pour chaque utilisateur un taux de code $R_u$, un ordre de modulation $m_u$, et un nombre d'éléments de ressource, RE, $G_u$ ;

   obtenir une matrice de multiplexage non orthogonale *m×G* **M** basée sur les taux de code $R_{u=1,2,...,U}$, les ordres de modulation $m_{u=1,2,...,U}$ et le nombre de RE, $G_{u=1,2,...,U}$ ainsi déterminés pour ladite pluralité de dispositifs récepteurs (50), où m = $m_1 + m_2 + ... + m_U$ est l'ordre d'une constellation de modulation étendue et G = max($G_1$, $G_2$, ...,$G_U$) est le nombre de RE attribués pour l'émission ;

   coder indépendamment, pour chaque dispositif récepteur (50), un message d'information $\mathbf{b}_u = (b_u(0),...,b_u(K_u - 1))$ afin d'obtenir un message d'information codé $\mathbf{e}_u = (e_u(0),...,e_u(E_u - 1))$, la longueur $E_u$ de chaque message d'information codé étant calculée par $E_u = G \cdot m_u + \Delta_B$, où $\Delta_B$ est un paramètre qui dépend de la qualité de canal de liaison descendante et du taux de code cible de chaque utilisateur ;

   multiplexer les messages d'informations codés $\mathbf{e}_0$, ..., $\mathbf{e}_{U-1}$ en un vecteur d'étiquettes l = (*l*(0), ..., *l*(*G* - 1)) ayant G étiquettes de *m* bits | / d'après ladite matrice de multiplexage **M**, les messages d'information codés étant écrits suivant les lignes ou suivant les colonnes dans la matrice de multiplexage **M**, chaque élément $(M)_{i,j}$ de ladite matrice de multiplexage **M** indiquant l'étiquette et la position de bit avec lesquelles chaque bit codé présent à l'entrée de multiplexage doit être mis en correspondance, et au moins deux éléments de colonne d'au moins une colonne de ladite matrice de multiplexage **M** étant associés à des dispositifs récepteurs différents ;

   utiliser chaque étiquette dudit vecteur d'étiquettes l = (*l*(0), ..., *l*(*G* - 1)), qui est lue suivant les colonnes dans la matrice de multiplexage **M**, pour sélectionner un symbole de modulation dans une constellation de modulation d'ordre *m* afin d'obtenir un vecteur de symboles x = (*x*(0), ..., *x*(*G* - 1)) pour lesdits messages d'information codés multiplexés $\mathbf{e}_0$, ..., $\mathbf{e}_{U-1}$ ; et

   envoyer un signal de liaison descendante **S** contenant ledit vecteur de symboles x = (*x*(0), ..., *x*(*G* - 1)).

2. Dispositif émetteur (10) selon la revendication 1, également conçu pour :

   recevoir les qualités de canal de liaison descendante en provenance de ladite pluralité de dispositifs récepteurs (50) ; et/ou

   estimer les qualités de canal de liaison descendante en mesurant les canaux de liaison montante correspondants de ladite pluralité de dispositifs récepteurs (50).

3. Dispositif émetteur (10) selon la revendication 2, dans lequel les qualités de canal de liaison descendante reposent sur des estimations de rapport signal sur bruit, SNR, ou de rapport signal sur interférence plus bruit, SINR.

4. Dispositif émetteur (10) selon l'une quelconque des revendications précédentes, également conçu pour obtenir ladite matrice de multiplexage **M** dans une bibliothèque préalablement calculée (16) contenant une pluralité de matrices de multiplexage $\mathbf{M}_h$ ou des représentations de celles-ci.

5. Dispositif émetteur (10) selon la revendication 4, également conçu pour signaler une indication de ladite matrice de multiplexage **M** à ladite pluralité de dispositifs récepteurs (50).

6. Dispositif émetteur (10) selon la revendication 5, dans lequel ladite indication est un indice de ladite bibliothèque préalablement calculée (16) pour ladite matrice de multiplexage **M,** et également conçu pour signaler à chaque dispositif de ladite pluralité de dispositifs récepteurs (50) leur indice de dispositif récepteur respectif associé $u = 1, 2, ..., U.$

7. Dispositif émetteur (10) selon la revendication 1, également conçu pour émettre ledit signal de liaison descendante **S** avec $G$ RE.

8. Système de communication sans fil, comprenant :

    un dispositif émetteur selon l'une quelconque des revendications 1 à 7 ; et
    une pluralité de dispositifs récepteurs (50), chaque dispositif récepteur étant conçu pour :

    recevoir ledit signal de liaison descendante **S** ;
    détecter et démultiplexer ledit signal de liaison descendante **S** à l'aide de la matrice de multiplexage non orthogonale **M** associée audit vecteur de symboles **x** et
    décoder ledit signal de liaison descendante **S** détecté et démultiplexé afin d'obtenir une estimation du message d'information.

9. Procédé d'émission, comprenant les étapes consistant à :

    sélectionner (100) une pluralité de dispositifs récepteurs d'utilisateur (50) $u = 1, 2, ..., U$ ayant différentes qualités de canal de liaison descendante ;
    déterminer (110) pour chaque utilisateur un taux de code $R_u$, un ordre de modulation $m_u$, et un nombre d'éléments de ressource, RE, $G_u$ ;
    obtenir (120) une matrice de multiplexage non orthogonale $m \times G$ **M** basée sur les taux de code $R_{u = 1, 2, ..., U,}$ les ordres de modulation $m_{u = 1, 2,..., U}$ et le nombre de RE, $G_{u = 1, 2,..., u}$ ainsi déterminés pour ladite pluralité de dispositifs récepteurs (50), où m = $m_1 + m_2 + ... + m_U$ est l'ordre d'une constellation de modulation étendue et G = max($G_1, G_2, ..., G_U$) est le nombre de RE attribués pour l'émission ;
    coder indépendamment (130), pour chaque dispositif récepteur (50), un message d'information $\mathbf{b}_u = (b_u(0), ..., b_u(K_u - 1))$ afin d'obtenir un message d'information codé $\mathbf{e}_u = (e_u(0), ..., e_u(E_u - 1))$, la longueur $E_u$ de chaque message d'information codé étant calculée par $E_u = G \cdot m_u + \Delta_B$, où $\Delta_B$ est un paramètre qui dépend de la qualité de canal de liaison descendante et du taux de code cible de chaque utilisateur ;
    multiplexer (140) les messages d'informations codés $\mathbf{e}_0, ..., \mathbf{e}_{U-1}$ en un vecteur d'étiquettes I = ($l(0), ..., l(G - 1)$) ayant G étiquettes de $m$ bits | $l$ d'après ladite matrice de multiplexage **M,** les messages d'information codés étant écrits suivant les lignes ou suivant les colonnes dans la matrice de multiplexage **M,** chaque élément $(M)_{i,j}$ de ladite matrice de multiplexage **M** indiquant l'étiquette et la position de bit avec lesquelles chaque bit codé présent à l'entrée de multiplexage doit être mis en correspondance, et au moins deux éléments de colonne d'au moins une colonne de ladite matrice de multiplexage **M** étant associés à des dispositifs récepteurs différents ;
    utiliser (150) chaque étiquette dudit vecteur d'étiquettes I = ($l(0), ..., l(G - 1)$), qui est lue suivant les colonnes dans la matrice de multiplexage **M,** pour sélectionner un symbole de modulation dans une constellation de modulation d'ordre $m$ afin d'obtenir un vecteur de symboles x = ($x(0), ..., x(G - 1)$) pour lesdits messages d'information codés multiplexés $\mathbf{e}_0, ..., \mathbf{e}_{U-1}$ ; et
    envoyer (160) un signal de liaison descendante **S** contenant ledit vecteur de symboles x = ($x(0), ..., x(G - 1)$).

10. Programme informatique contenant des instructions qui, lorsque le programme est exécuté par un ordinateur, amènent l'ordinateur à exécuter le procédé selon la revendication 9.

Fig. 1

Fig. 2

Fig. 3

11

**RA-CEMA scheduler**

$CQI_0$

$CQI_1$

**Scheduler**

$G_0$
$m_0$
$R_0$

$G_1$
$m_1$
$R_1$

**MCS optimizer**

*MUX matrix index*

$R_0^*$

$R_1^*$

Fig. 4

$e_0$  $\pi_0$  $f_0$

$e_1$  $\pi_1$  $f_1$

$G$ columns

$\mathbf{H} =$

| $f_0(0), f_0(1),$ | ... | $f_0(d_0(1)-1)$ | $f_1(0), f_1(1),$ | ... | $f_1(d_1(1)-1)$ | $\omega_0$ |
| $f_0(d_0(1)), f_0(d_0(1)+1),$ | ... | $f_0(d_0(2)-1)$ | $f_1(d_1(1)), f_1(d_1(1)+1),$ | ... | $f_1(d_1(2)-1)$ | $\omega_1$ |
| ... | | | ... | | | |
| $f_0(d_0(m-1)),$ | ... | $f_0(E_0-1)$ | $f_1(d_1(m-1)),$ | ... | $f_1(E_1-1)$ | $\omega_{m-1}$ |

Fig. 5

Fig. 6

```
                        ┌─────────────────────┐
                        │       START         │
                        └──────────┬──────────┘
                                   ↓
┌──────────────────────────────────────────────────────────────────────┐
│              Receive DL CQI from all active receivers                  │
└──────────────────────────────────┬───────────────────────────────────┘
                                   ↓
┌──────────────────────────────────────────────────────────────────────┐
│            Select a plurality of receivers having different CQI        │
└──────────────────────────────────┬───────────────────────────────────┘
                                   ↓
┌──────────────────────────────────────────────────────────────────────┐
│  Determining code rates R_{u=1,2,...,U}, modulation orders m_{u=1,2,...,U} and number of REs │
│            G_{u=1,2,...,U} for the selected receivers                  │
└──────────────────────────────────┬───────────────────────────────────┘
                                   ↓
┌──────────────────────────────────────────────────────────────────────┐
│       Selecting a multiplexing matrix M from a pre-determined library  │
└──────────────────────────────────┬───────────────────────────────────┘
                                   ↓
┌──────────────────────────────────────────────────────────────────────┐
│ Signalling selected matrix index and their corresponding user indices to the receivers │
└──────────────────────────────────┬───────────────────────────────────┘
                                   ↓
┌──────────────────────────────────────────────────────────────────────┐
│ For each selected receiver: selecting one information message b_u = (b_u(0),...,b_u(K_u − │
│ 1)) and encoding the information message to obtain an encoded information message │
│            e_u = (e_u(0),...,e_u(E_u − 1))                            │
└──────────────────────────────────┬───────────────────────────────────┘
                                   ↓
┌──────────────────────────────────────────────────────────────────────┐
│  Multiplexing the encoded information messages e_0,...,e_{U−1} into a label vector │
│            l = (l(0),...,l(G − 1)) having m-bit labels                │
└──────────────────────────────────┬───────────────────────────────────┘
                                   ↓
┌──────────────────────────────────────────────────────────────────────┐
│  Using each label of the label vector l = (l(0),...,l(G − 1)) to select a modulation │
│  symbol from a modulation constellation of order m so as to obtain a symbol vector │
│            x = (x(0),...,x(G − 1))                                    │
└──────────────────────────────────┬───────────────────────────────────┘
                                   ↓
┌──────────────────────────────────────────────────────────────────────┐
│  Transmitting DL signal S comprising the symbol vector x = (x(0),...,x(G − 1)) in G │
│            time-frequency REs                                          │
└──────────────────────────────────┬───────────────────────────────────┘
                                   ↓
                        ┌─────────────────────┐
                        │        END          │
                        └─────────────────────┘
```

Fig. 7

$$M = \begin{bmatrix} e_0(0) & e_0(1) & e_0(2) & e_1(0) & e_1(1) & e_1(2) & e_1(3) \\ e_0(3) & e_0(4) & e_0(5) & e_1(4) & e_1(5) & e_1(6) & e_1(7) \\ e_0(6) & e_0(7) & e_0(8) & e_1(8) & e_1(9) & e_1(10) & e_1(11) \\ e_0(9) & e_0(10) & e_0(11) & e_1(12) & e_1(13) & e_1(14) & e_1(15) \end{bmatrix}$$

Fig. 8

$$M = \begin{bmatrix} e_0(0) & e_0(1) & e_0(2) & e_0(3) & e_0(4) & e_0(5) & e_0(6) \\ e_0(7) & e_0(8) & e_0(9) & e_0(10) & e_0(11) & e_1(0) & e_1(1) \\ e_1(2) & e_1(3) & e_1(4) & e_1(5) & e_1(6) & e_1(7) & e_1(8) \\ e_1(9) & e_1(10) & e_1(11) & e_1(12) & e_1(13) & e_1(14) & e_1(15) \end{bmatrix}$$

Fig. 9

| $b_0$ | $b_1$ | $b_2$ | $b_3$ | $b_4$ | $b_5$ |
|---|---|---|---|---|---|
| H | H | M | M | L | L |

Fig. 10

Fig. 11

Fig. 12

240 symbols

$$M_0 = \begin{bmatrix} F & F & F & F \dots F & F & F \\ F & F & F & F \dots F & F & F \\ N & N & N & N \dots N & N & N \\ N & N & N & N \dots N & N & N \\ N & N & N & N \dots N & N & N \\ N & N & N & N \dots N & N & N \end{bmatrix}$$

200 symbols   40 symbols

$$M_1 = \begin{bmatrix} F & F & F \dots F & N \dots N \\ F & F & F \dots F & N \dots N \\ N & N & N \dots N & N \dots N \\ N & N & N \dots N & N \dots N \\ N & N & N \dots N & N \dots N \\ N & N & N \dots N & N \dots N \end{bmatrix}$$

160 symbols   80 symbols

$$M_2 = \begin{bmatrix} F & F & F \dots F & N \dots N \\ F & F & F \dots F & N \dots N \\ N & N & N \dots N & N \dots N \\ N & N & N \dots N & N \dots N \\ N & N & N \dots N & N \dots N \\ N & N & N \dots N & N \dots N \end{bmatrix}$$

200 symbols   40 symbols

$$M_3 = \begin{bmatrix} F & F & F \dots F & F \dots F \\ F & F & F \dots F & F \dots F \\ N & N & N \dots N & F \dots F \\ N & N & N \dots N & F \dots F \\ N & N & N \dots N & F \dots F \\ N & N & N \dots N & F \dots F \end{bmatrix}$$

240 symbols

$$M_4 = \begin{bmatrix} F & F & F & F \dots F & F & F \\ N & N & N & N \dots N & N & N \\ N & N & N & N \dots N & N & N \\ N & N & N & N \dots N & N & N \\ N & N & N & N \dots N & N & N \\ N & N & N & N \dots N & N & N \end{bmatrix}$$

160 symbols   80 symbols

$$M_5 = \begin{bmatrix} F & F & F \dots F & N \dots N \\ N & N & N \dots N & N \dots N \\ N & N & N \dots N & N \dots N \\ N & N & N \dots N & N \dots N \\ N & N & N \dots N & N \dots N \\ N & N & N \dots N & N \dots N \end{bmatrix}$$

80 symbols   160 symbols

$$M_6 = \begin{bmatrix} F & F & F \dots F & N \dots N \\ N & N & N \dots N & N \dots N \\ N & N & N \dots N & N \dots N \\ N & N & N \dots N & N \dots N \\ N & N & N \dots N & N \dots N \\ N & N & N \dots N & N \dots N \end{bmatrix}$$

200 symbols   40 symbols

$$M_7 = \begin{bmatrix} F & F & F \dots F & F \dots F \\ F & F & F \dots F & F \dots F \\ F & F & F \dots F & F \dots F \\ N & N & N \dots N & F \dots F \\ N & N & N \dots N & F \dots F \\ N & N & N \dots N & F \dots F \end{bmatrix}$$

240 symbols

$$M_8 = \begin{bmatrix} F & F & F & F \dots F & F & F \\ F & F & F & F \dots F & F & F \\ F & F & F & F \dots F & F & F \\ F & F & F & F \dots F & F & F \\ N & N & N & N \dots N & N & N \\ N & N & N & N \dots N & N & N \end{bmatrix}$$

Fig. 13

27

Fig. 14

Fig. 15

Fig. 16

Fig. 17

**100**
Select a plurality of receiver devices

**110**
Determining for each user a code rate $R_u$, a modulation order $m_u$, and number of Resource Elements, REs, $G_u$

**120**
Obtaining a multiplexing matrix **M** based on the determined code rates $R_{u=1,2,...,U}$, modulation orders $m_{u=1,2,...,U}$ and number of REs $G_{u=1,2,...,U}$ for the receiver devices

**130**
Independently encoding for each receiver device an information message $\mathbf{b}_u = (b_u(0), ..., b_u(K_u - 1))$ so as to obtain an encoded information message $\mathbf{e}_u = (e_u(0), ..., e_u(E_u - 1))$

**140**
Multiplexing the encoded information messages $\mathbf{e}_0, ..., \mathbf{e}_{U-1}$ into a label vector $\mathbf{l} = (l(0), ..., l(G - 1))$ having $m$-bit labels based on the multiplexing matrix **M**

**150**
Using each label of the label vector $\mathbf{l} = (l(0), ..., l(G - 1))$ to select a modulation symbol from a modulation constellation of order $m$ so as to obtain a symbol vector $\mathbf{x} = (x(0), ..., x(G - 1))$ for the multiplexed encoded information messages $\mathbf{e}_0, ..., \mathbf{e}_{U-1}$

**160**
Transmitting a downlink signal $S$ comprising said symbol vector $\mathbf{x} = (x(0), ..., x(G - 1))$

Fig. 18

**50**

RX | Input

**60**

Output

**Memory**

Fig. 19

**200**
Receiving a downlink signal $S$ comprising a symbol vector $\mathbf{x} = (x(0), \ldots, x(G-1))$

**210**
Detecting and de-multiplexing said downlink signal $S$ using a multiplexing matrix $\mathbf{M}$ associated with said symbol vector $\mathbf{x} = (x(0), \ldots, x(G-1))$

**220**
Decoding said detected and de-multiplex downlink signal $S$ so as to obtain an estimate of an information message $\mathbf{b}_u = (b_u(0), \ldots, b_u(K_u - 1))$ associated with said receiver device

Fig. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2299737 A1

- EP 2326053 A1